# EUROPÄISCHE PATENTSCHRIFT

(11) **EP 1 708 843 B1**
(45) Veröffentlichungstag und Bekanntmachung des Hinweises auf die Patenterteilung: **20.08.2008**
(21) Anmeldenummer: 05700021.8
(22) Anmeldetag: 27.01.2005
(51) Int. Cl.: B23K 9/133

(54) **VORRICHTUNG UND VERFAHREN ZUM TRANSPORT EINES SCHWEISSDRAHTES**
DEVICE AND METHOD FOR TRANSPORTING A WELDING ROD
DISPOSITIF ET PROCEDE POUR TRANSPORTER UNE BAGUETTE D'APPORT

(30) Priorität: 27.01.2004 AT 1032004
(43) Veröffentlichungstag der Anmeldung: 11.10.2006
(73) Patentinhaber: Fronius International GmbH, 4643 Pettenbach (AT)
(72) Erfinder: STIEGLBAUER, Walter, A-4901 Manning (AT); KRONEGGER, Wolf, A-4655 Vorchdorf (AT)
(74) Vertreter: Sonn & Partner Patentanwälte
(86) Internationale Anmeldenummer: PCT/AT2005/000022
(87) Internationale Veröffentlichungsnummer: WO 2005/070608

(56) Entgegenhaltungen:
- EP-A- 0 320 397
- US-A- 1 898 014
- US-A- 2 915 171

## Beschreibung

Die Erfindung betrifft eine Drahtfördervorrichtung gemäß dem Oberbegriff des Anspruchs 1 sowie ein Verfahren gemäß dem Oberbegriff des Anspruchs 21, welche der SU-A-837661 zu entnehmen sind.

Bei den aus dem Stand der Technik bekannten Systemen sind unterschiedliche Drahtfördervorrichtungen bzw. Antriebe eingesetzt, welche beispielsweise hohem Schlupf und Verschleiß unterliegen und des weiteren große Abmessungen aufweisen und außerdem den Schweißdraht verformen. Diese Drahtfördervorrichtungen können nur erschwert in Handschweißbrennern eingebaut werden, da aufgrund der doch großen Abmessungen der Handschweißbrenner dann auch relativ groß ausgeführt werden müsste. Dadurch würde die Führung und Handhabung des Handschweißbrenners für den Benutzer erschwert und wesentlich umständlicher. Somit ist es erforderlich, die Drahtfördervorrichtung außerhalb des Handschweißbrenners anzuordnen, wodurch jedoch die Vorteile einer Drahtförderung möglichst nahe am Ort der Schweißung verloren geht.

Es sind auch Drahtfördervorrichtungen, insbesondere Planetarantriebe, bekannt, welche zwar kompakter ausgeführt sind, jedoch sehr hohen Drehzahlen unterliegen, wodurch beispielsweise bei einer Drahtförderrichtungsumkehr das Abbremsen des Motors sehr lange dauert und somit ein sehr großer Nachlauf zustande kommt, wodurch diese sehr träge sind. Somit ist zwar ein Einbau dieser Drahtfördervorrichtungen in einem Handschweißbrenner möglich, jedoch ist eine reversierende Drahtförderung praktisch nicht anwendbar. Außerdem ist bei dem Planetarantrieb nachteilig, dass für unterschiedlichen Schweißdrahtdurchmesser ein Wechsel des Transportelementes, des gesamten Antriebes oder der Förderrollen erforderlich ist, wobei der Förderrollenwechsel allerdings aufgrund kleiner Druckelemente, beispielsweise Druckfedern, sehr umständlich ist.

Die SU 1 088 898 A zeigt eine Vorrichtung zum Fördern eines Schweißdrahtes, bei der kugelförmige Transportelemente auf den zu fördernden Draht gedrückt werden. Die Transportelemente werden durch die Drehung einer Spiralfeder in Längsrichtung bewegt, wodurch sich der Schweißdraht ebenso in Längsrichtung fortbewegt. Über eine Führungsbahn im Gehäuse der Vorrichtung werden die Transportkugeln wieder zurückbewegt. Die Dimensionen der Vorrichtung sind auf einem bestimmten Drahtdurchmesser abgestimmt, weshalb eine Anpassung an Schweißdrähte mit verschiedenen Durchmessern nicht bzw. nur mit hohem Aufwand möglich ist.

Die SU 1 082 577 A zeigt eine Vorrichtung zum Fördern eines Schweißdrahtes bei der in rotierenden Hülsen verlaufende Kugeln zum Transport des Schweißdrahtes verwendet werden. Auch bei dieser Konstruktion ist die Förderung von Schweißdrähten nur mit einem bestimmten Drahtdurchmesser möglich.

Die SU 846 160 B zeigt eine weitere Variante einer Drahtfördervorrichtung bei der flexible Elemente in Rotation versetzt werden und durch Druck auf den Schweißdraht diesen in die gewünschte Richtung fördern. Die Konstruktion zeichnet sich durch besonders geringe Anpresskraft aus, wodurch auch weiche Schweißdrähte, beispielsweise aus Aluminium, optimal gefördert werden können. Aufgrund des geringen Anpressdruckes ist jedoch ein großer Schlupf bedingt.

Die Aufgabe der vorliegenden Erfindung besteht daher in der Schaffung einer Drahtfördervorrichtung, welche eine kleine und kompakte Bauweise aufweist, gleichzeitig einen geringen Verschleiß und somit geringe Wartung und geringe Kosten aufweist. Eine weitere Aufgabe liegt darin, eine reversierende Bewegung mit möglichst raschen Reaktionszeiten zu realisieren.

Eine Aufgabe der Erfindung besteht auch darin, eine automatische Anpassung an unterschiedliche Schweißdrähte bzw. Schweißdrahtdurchmesser zu erzielen.

Eine weitere Aufgabe der Erfindung besteht in der Schaffung eines oben genannten Verfahrens zum Fördern eines Schweißdrahtes, welches kostengünstig durchführbar ist und reversierende Bewegungen mit möglichst raschen Reaktionszeiten und eine automatische Anpassung an unterschiedliche Schweißdrähte bzw. Schweißdrahtdurchmesser zulässt.

Die erfindungsgemäßen Aufgaben werden durch eine Drahtfördervorrichtung gemäβ Anspruch 1 gelöst. Der Vorteil liegt darin, dass bei der erfindungsgemäßen Drahtfördervorrichtung die Transportelemente, insbesondere Kugeln, in dem Element bzw. Käfig ähnlich einem Kugellager geführt werden, wodurch die Reibung erheblich verringert wird, da die Kontaktfläche einer Kugel wesentlich geringer ist als bei anderen, herkömmlichen Systemen bzw. Formen. Das Element zur Führung des Schweißdrahtes kann den Schweißdraht gleichzeitig antreiben oder lediglich führen. Zur Anpassung der Drahtfördervorrichtung an Schweißdrähte mit verschiedenem Durchmesser ist zumindest ein Element entsprechend verschiebbar angeordnet. Dabei kann dieses Element ein den Schweidraht antreibendes oder lediglich den Schweißdraht führendes Element sein. Somit müssen für unterschiedliche Schweißdrahtmaterialien sowie Schweißdrahtdurchmesser keine für die Schweißdrahtförderung notwendigen Bauteile gewechselt werden. Somit kann eine automatische Anpassung an verschiedenste Schweißdrähte durchgeführt und immer ein gleichbleibender Anpressdruck von den Transportelementen auf den Schweißdraht ausgeübt werden. Des weiteren zeichnet sich die Drahtfördervorrichtung über besonders rasche Reaktion aus, da bei einer Richtungsumkehr wenig bis gar kein Nachlauf der im Element bzw. Käfig eingesetzten Transportelemente stattfindet. Hierdurch wird der Nachlauf sowie die Reaktionszeit für die Förderrichtungsumkehr lediglich durch den mit der Drahtfördervorrichtung gekoppelten Elektromotor beeinflusst. Ein weiterer Vorteil besteht darin, dass eine sehr einfache Ankopplung an den Antrieb bzw. Motor gebildet werden kann.

Durch eine Ausgestaltung nach Anspruch 2, ist zumindest ein Element in einem Grundkörper verschiebbar angeordnet. Dies stellt eine einfache Realisierung der verschiebbaren Anordnung des Elements dar.

Durch eine Ausgestaltung gemäß den Ansprüchen 3 und 4 können die Elemente um den Schweißdraht herum und somit die Elemente zu dem Schweißdraht hin, also entlang des Schweißdrahtumfangs, angeordnet werden, weshalb diese dadurch optimal auf den Schweißdraht drücken, bzw. einwirken. Durch diese Anordnungen könnens mehrere Druckpunkte am Schweißdraht gebildet werden, so dass ein sicherer Transport gewährleistet ist. Wirken mehrere Transportelemente eines Elementes auf den Schweißdraht ein, so steigt die Anzahl der Druckpunkte proportional zur Anzahl der Elemente.

Durch eine Ausgestaltung nach Anspruch 5 können die Abmessungen der erfindungsgemäßen Drahtfördervorrichtung wesentlich verringert und somit eine kleine und kompakte Bauweise erreicht werden. Gleichzeitig wird ein sehr einfaches und kostengünstiges Antriebsmittel für die Transportelemente geschaffen.

Von Vorteil ist aber auch eine Ausgestaltung nach Anspruch 6, da dadurch nur geringe, beispielsweise durch Kanten und/oder Druckflächen verursachte Reibunsverluste entstehen.

Durch eine Ausgestaltung nach Anspruch 7 kann eine einfache Positionierung der einzelnen Teile zueinander erreicht werden.

Eine Ausgestaltung nach den Ansprüchen 8 bis 11 hat den Vorteil, dass dadurch die Antriebshülse drehbar am Grundkörper gelagert ist und somit eine einfache Lagerung mit geringem Platzbedarf geschaffen werden kann. Damit ist es auch möglich, dass beispielsweise ein Kugellager im Bereich des Fortsatzes eingesetzt werden kann, wodurch die Reibungsverluste wesentlich reduziert werden.

Eine Ausgestaltung nach Anspruch 12 ist von Vorteil, da dadurch ein einfacher, aus dem Stand der Technik bekannter Antrieb bzw. Motor eingesetzt wird.

Durch die Merkmale gemäß den Ansprüchen 13 bis 15 kann ein einfacher und kompakter Aufbau der Drahtfördervorrichtung geschaffen werden.

Durch die Ausgestaltung nach Anspruch 16 kann eine einfache Einstellung auf verschiedene Schweißdrähte, insbesondere Materialien und Dicke des Schweißdrahtes, vorgenommen werden.

Es ist aber auch eine Ausgestaltung nach Anspruch 17 von Vorteil, da dadurch eine einfache Führung für das Element bzw. den Käfig mit den darin angeordneten Transportelementen geschaffen wird, so dass dieses in Längsrichtung verschoben wird und somit eine automatische Einstellung auf die unterschiedlichen Schweißdrähte sowie Schweißdrahtdicken möglich ist.

Eine Ausgestaltung nach Anspruch 18 ist von Vorteil, da dadurch eine einfache und kostengünstige Ausbildung des Transportelementes eingesetzt wird und somit eine reibungslose Förderung des Transportelementes ermöglicht ist.

Von Vorteil ist aber auch eine Ausgestaltung nach Anspruch 19, da dadurch eine kleine und kompakte Bauweise der Drahtfördervorrichtung erreicht ist und somit ein Einsatz in einem Hand-schweißbrenner möglich ist.

Es ist aber auch eine Ausgestaltung nach Anspruch 20 von Vorteil, da dadurch die Drahtfördervorrichtung an den strategisch wichtigsten Punkten für die Drahtförderung in einer Schweißanlage integriert werden kann, ohne dabei die Baugröße der Schweißanlage wesentlich zu beeinflussen.

Gelöst wird die erfindungsgemäße Aufgabe auch durch ein Verfahren der oben angegebenen Art gemäß den Ansprüchen 21 bis 40, wobei die sich daraus ergebenden Vorteile aus der Beschreibung bzw. aus den zuvor beschriebenen Ansprüchen 1 bis 20 entnommen werden können.

Die vorliegende Erfindung wird anhand der beigefügten Zeichnungen näher erläutert.

Darin zeigen:
Fig. 1 eine schematische Darstellung eines Schweißgerätes;
Fig. 2 und Fig. 3 eine perspektivische schematische Darstellung eines erfindungsgemäßen Elements zur Führung des Schweißdrahtes;
Fig. 4 eine perspektivische Ansicht einer Halbschale des Elements;
Fig. 5 eine Draufsicht auf die Halbschale gemäß Fig. 4 mit eingezeichneten Transportelementen;
Fig. 6 eine Schnittdarstellung entlang der Schnittlinie VI - VI in Fig. 5;
Fig. 7 eine perspektivische schematische Darstellung eines Elements ohne Transportelemente;
Fig. 8 eine Schnittdarstellung entlang der Schnittlinie VIII - VIII in Fig. 5;
Fig. 9 eine Ansicht der Halbschale mit Transportelementen mit veränderter Führungsbahn;
Fig. 10 eine perspektivische schematische Darstellung eines Grundkörpers der erfindungsgemäßen Vorrichtung;
Fig. 11 eine zweidimensionale schematische Darstellung des Grundkörpers;
Fig. 12 eine Schnittdarstellung entlang der Schnittlinie XII - XII in Fig. 11;
Fig. 13 eine Draufsicht auf den Grundkörper gemäß Fig. 10;
Fig. 14 eine perspektivische schematische Darstellung eines Antriebsmittels;
Fig. 15 eine schematische Darstellung des Antriebsmittels;
Fig. 16 eine Schnittdarstellung entlang der Schnittlinie XVI - XVI in Fig. 15;
Fig. 17 eine Schnittdarstellung entlang der Schnittlinie XVII - XVII in Fig. 15;
Fig. 18 ein Ausschnitt des Gewindes des Antriebsmittels;
Fig. 19 eine schematische Darstellung der zusammengebauten Drahtfördervorrichtung;
Fig. 20 eine Draufsicht auf die Drahtfördervorrichtung;
Fig. 21 eine Schnittdarstellung entlang der Schnittlinie XXI - XXI in Fig. 19;
Fig. 22 eine Schnittdarstellung entlang der Schnittlinie XXI - XXI in Fig. 19, mit einem gegenüber Fig. 21 geänderten, größeren Schweißdrahtdurchmesser;
Fig. 23 eine Draufsicht auf die Drahtfördervorrichtung gemäß Fig. 22;
Fig. 24 eine perspektivische, schematische Explosionsdarstellung einer weiteren Ausführungsform der Drahtfördervorrichtung;
Fig. 25 eine perspektivische, schematische Darstellung der Drahtfördervorrichtung im zusammengebauten Zustand;
Fig. 26 eine zweidimensionale schematische Darstellung der Drahtfördervorrichtung mit einem Antrieb;
Fig. 27 eine Schnittdarstellung entlang der Schnittlinie XXVII - XXVII in Fig. 26;
Fig. 28 eine schematische Darstellung einer Antriebsscheibe;
Fig. 29 eine schematische teilweise geschnittene Darstellung einer weiteren Ausführungsform einer Drahtfördervorrichtung;
Fig. 30 eine Schnittdarstellung entlang der Schnittlinie XXX - XXX in Fig. 29;
Fig.31 eine schematische Darstellung einer weiteren Ausführungsvariante der Drahtfördervorrichtung;
Fig. 32 eine weitere Ausführungsvariante der Drahtfördervorrichtung in teilweise geschnittener Darstellung;
Fig. 33 die Drahtfördervorrichtung im zusammengebauten und ungeschnittenen Zustand;
Fig. 34 eine weitere Ausführungsvariante der Drahtfördervorrichtung in teilweise geschnittener Darstellung;
Fig. 35 die Drahtfördervorrichtung im zusammengebauten und ungeschnittenen Zustand;
Fig. 36 ein Schnittbild der Drahtfördervorrichtung gemäß Fig. 37 entlang der Schnittlinie XXXVI - XXXVI;
Fig. 37 ein Schnittbild der Drahtfördervorrichtung gemäß Fig. 36 entlang der Schnittlinie XXXVII - XXXVII;
Fig. 38 eine schematische Darstellung der Drahtfördervorrichtung mit seitlich bzw. unterhalb zur Drahtfördervorrichtung angeordnetem Antrieb;
Fig. 39 eine weitere schematische Darstellung der Drahtfördervorrichtung mit seitlich bzw. unterhalb zur Drahtfördervorrichtung angeordnetem Antrieb;
Fig. 40 einen Ausschnitt der erfindungsgemäßen Drahtfördervorrichtung, wobei zwei Elemente auf einen Flachdraht einwirken;
Fig. 41 einen weiteren Ausschnitt mit vier auf einen Flachdraht einwirkenden Elementen;
Fig. 42 einen weiteren Ausschnitt mit drei auf einen dreieckigen Schweißdraht einwirkenden Elementen; und
Fig. 43 eine schematische Darstellung eines Elementes mit einem länglich-ovalem Transportelement.

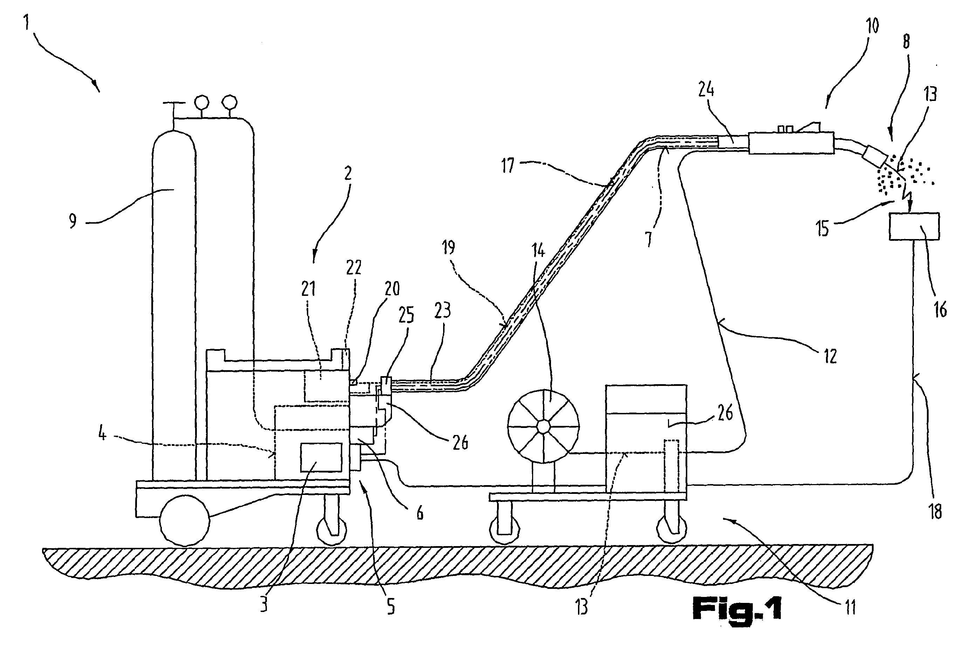

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der Elektrode und einem Werkstück 16 wird über eine Schweißleitung 17 vom Leistungsteil 3 der Stromquelle 2 dem Brenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist des weiteren eine Ein- und/oder Ausgabevorrichtung 22 auf, über welche die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Des weiteren ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

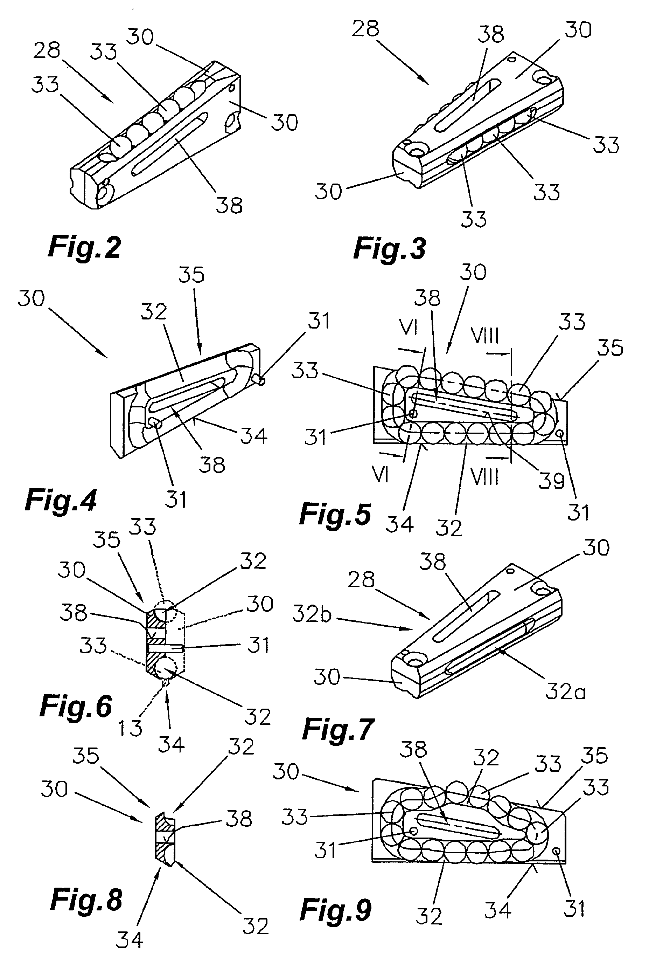

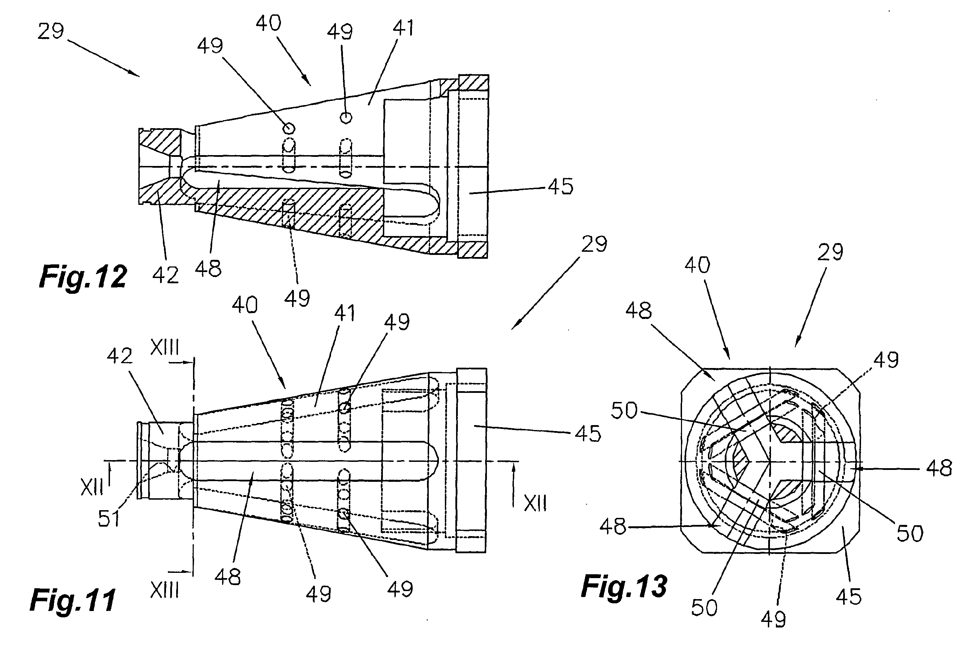

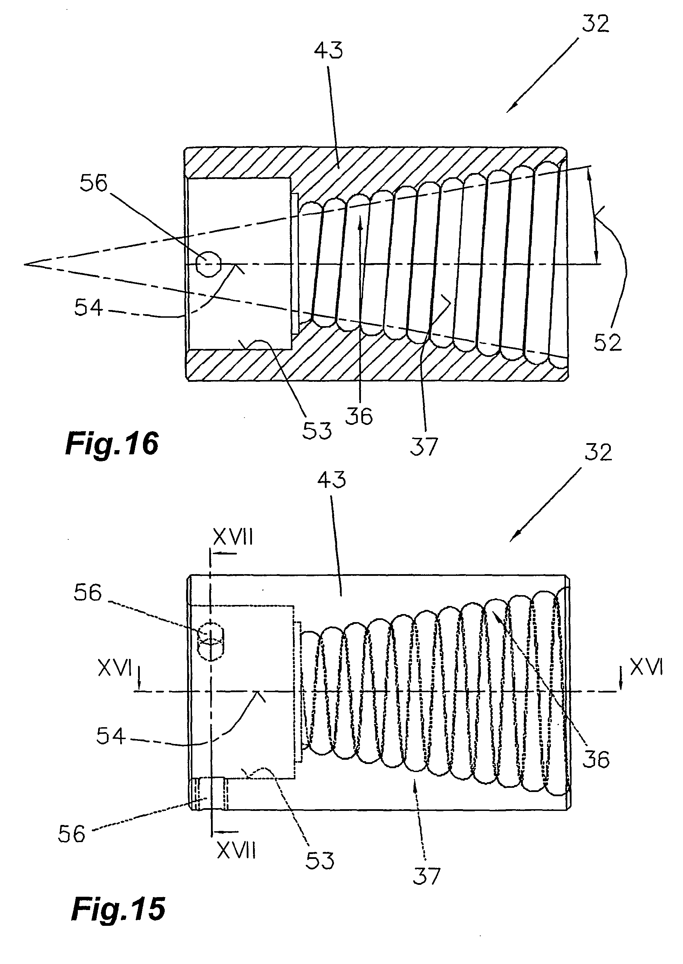

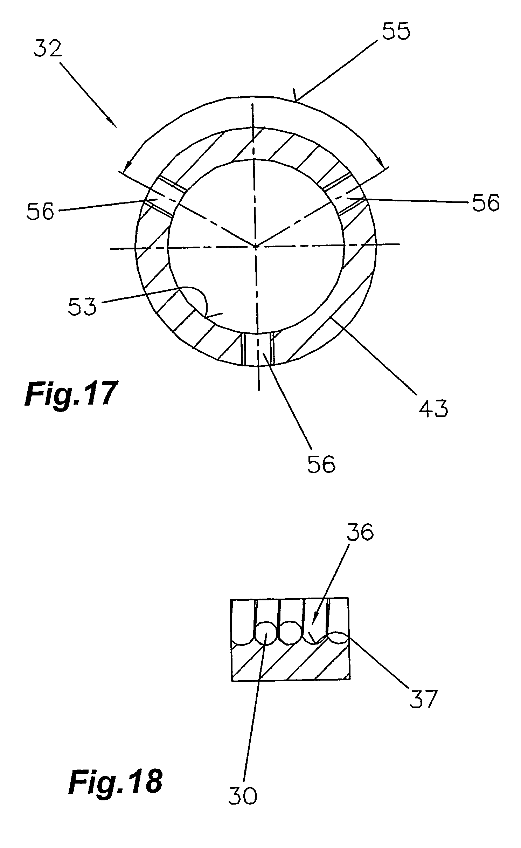

In den Fig. 2 bis 43 sind verschiedene Ausführungsformen von Drahtfördervorrichtungen 27 zum Transport von einem Schweißdraht 13 dargestellt. Die Drahtfördervorrichtung 27 fördert beispielsweise den Schweißdraht 13 von einem Drahtvorrat, insbesondere der Vorratstrommel 14, zu einer Verbraucherstelle, insbesondere den Schweißbrenner 10.

Beispielsweise kann die Drahtfördervorrichtung 27 im Schweißgerät 1 oder im Schweißbrenner 10 oder als externe Antriebseinheit eingesetzt werden. Auch ist es möglich, dass in einer Schweißanlage mehrere derartige Drahtfördervorrichtungen 27 gleichzeitig eingesetzt werden oder mit anderen Aufbauten von Drahtfördervorrichtungen kombiniert werden.

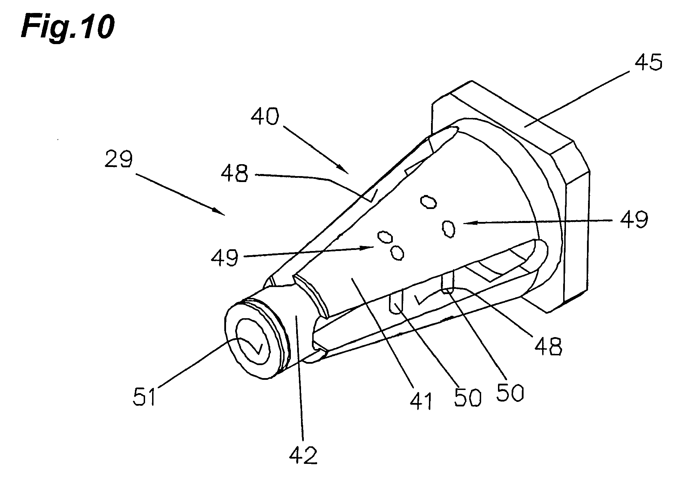

Speziell ist in den Fig. 2 bis 9 ein Element 28, insbesondere ein Käfig, der Drahtfördervorrichtung 27 dargestellt. Das Element 28 ist in einem Grundkörper 29 (s. Fig. 10-13 und Fig. 19-27) bevorzugt verschiebbar, insbesondere längs- und/oder höhenverschiebbar angeordnet.

Das Element 28 ist dabei beispielsweise aus zwei Halbschalen 30 gebildet, welche über zumindest einen Passstift 31 zueinander positioniert sind, wie in Fig. 4 ersichtlich. Selbstverständlich ist es möglich, die beiden Halbschalen 30 auch in einer anderen Art und Weise zueinander zu positionieren. Beispielsweise ist es möglich, die beiden Halbschalen 30 über eine Schraubverbindung miteinander zu verbinden, wobei für die exakte Positionierung zusätzlich zumindest ein Passstift 31 einsetzbar ist. In die Halbschale 30 ist eine umlaufende Führungsbahn 32 eingearbeitet, in welcher Transportelemente 33 angeordnet sind. Dabei sind die Transportelemente 33 in Form von Kugeln ausgebildet. Diese können aber auch in anderen Ausführungen bzw. Konturen ausgebildet sein. Grundsätzlich ist zu erwähnen, dass die Führungsbahn 32 dabei so ausgebildet ist, dass auf einer dem Schweißdraht 13 zugewandten Seite 34 des Elements 28 zumindest ein Transportelement 33 teilweise aus dem Element 28 herausragt und auf den Schweißdraht 13 einwirkt, wie dies in Fig. 6 ersichtlich ist, wobei der Schweißdraht 13 strichliert eingezeichnet ist. Die Kontur der Führungsbahn 32 ist bevorzugt der Kontur bzw. der Form der Transportelemente 33 angepasst. Das Transportelement 33, insbesondere die Kugel, ragt nur geringfügig aus dem Element 28 heraus und drückt bei zusammengebauter Drahtfördervorrichtung 27 auf den Schweißdraht 13. Wesentlich ist hierbei, dass die Führungsbahn 32 derart ausgebildet ist, dass bei zusammengebauten Halbschalen 30 eine Nut bzw. Öffnung 32a, wie aus Fig. 7 ersichtlich, gebildet ist, durch welche die Transportelemente 33 aus dem Inneren der Führungsbahn 32 herausragen können. Somit ist das Transportelement 33 gegen Herausfallen geschützt und ragt aber trotzdem ausreichend aus dem Element 28 heraus, um mit dem Schweißdraht 13 in Wirkverbindung zu stehen.

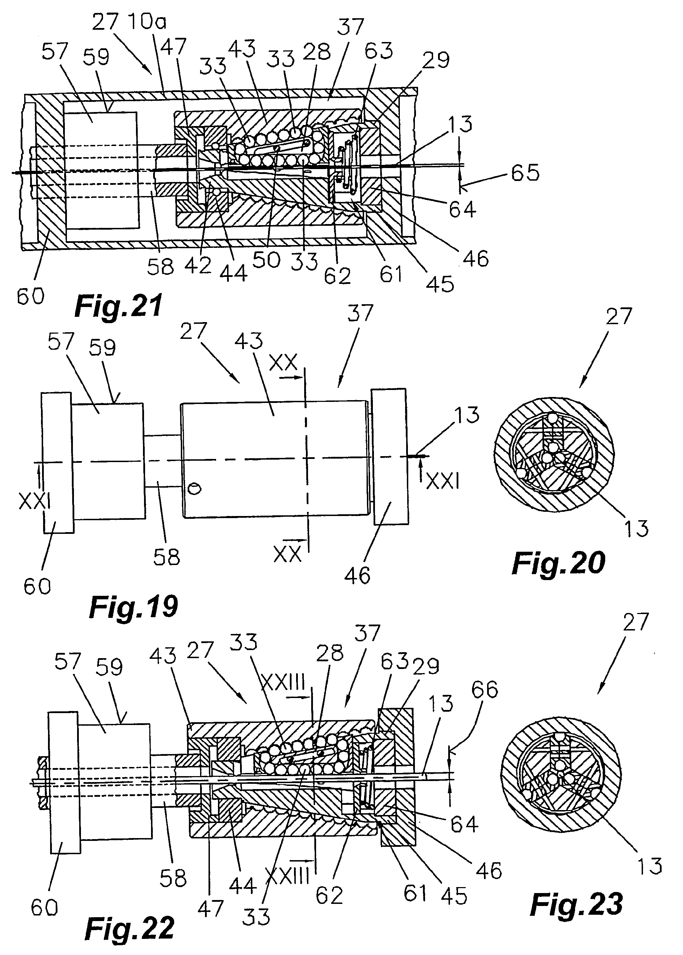

Auf einer dem Schweißdraht 13 gegenüberliegenden Seite 35 des Elements 28 ist die Führungsbahn 32 so ausgebildet, dass das Transportelement 33 ebenfalls teilweise aus dem Element 28 herausragt und beispielsweise in ein Gewinde 36 eines Antriebsmittels 37 eingreift, wobei diese Anordnung bzw. Funktion in den nachfolgenden Fig. 19 bis 23 ersichtlich und beschrieben ist. Das Transportelement 33 ragt auf dieser Seite 35 fast bis zum Mittelpunkt des Transportelementes 33 heraus, damit das Transportelement 33 ausreichend in das Gewinde 36 des Antriebsmittels 37 eingreifen kann, jedoch ein Herausfallen verhindert wird. Hierbei wird wiederum bei zusammengebauten Halbschalen 30 und nicht eingesetzten Transportelementen 33 eine Nut bzw. Öffnung 32b gebildet. Zumindest ein Transportelement 33 muss in das Gewinde 36 des Antriebsmittels 37 eingreifen. Durch Drehung des Antriebsmittels 37 wird das jeweilige in das Gewinde 36 eingreifende Transportelement 33 in der umlaufenden Führungsbahn 32 des Elements 28 bzw. der Halbschalen 30 gefördert. Somit wird aufgrund der Drehung des Gewindes 36 eine Verschiebung des eingreifenden Transportelementes 33 bewirkt, wodurch die weiteren Transportelemente 33 ebenfalls verschoben werden. Vorteilhafterweise greifen mehrere Transportelemente 33 gleichzeitig in das Gewinde 36 ein, wodurch eine sicherere Verschiebung der Transportelemente 33 entlang der Führungsbahn 32 erreicht wird. Bei einem derartigen Aufbau, bei dem mehrere Transportelemente 33 gleichzeitig auf den Schweißdraht 13 einwirken, wird in vorteilhafter Weise erreicht, dass mehrere Druckpunkte am Schweißdraht 13 gebildet werden, so dass eine sichere Förderung des Schweißdrahtes 13 gewährleistet ist.

Weiters ist in die Halbschale 30 des Elements 28 eine Führungsnut 38 eingearbeitet, über welche das Element 28 bzw. die Halbschalen 30 auf dem Grundkörper 29 positioniert bzw. geführt werden. In die Führungsnut 38 greift zumindest ein Führungszapfen 50 des Grundkörpers 29 ein, so dass das Element 28 entlang einer sich entlang der Führungsnut 38 erstreckenden Mittelachse 39 verschoben werden kann(s. Fig. 19 bis 23).

Fig. 9 zeigt eine andere Ausgestaltung der Halbschalen 30 des Elementes 28, bei welcher die Führungsbahn 32 im Bereich der Wirkverbindung mit dem Schweißdraht 13 und/oder mit dem Gewinde 36 so verändert wurde, dass die Transportelemente 33 nur über eine geringe Länge aus dem Element 28, bzw. den Halbschalen 30 herausragen. Selbstverständlich sind auch andere Ausbildungen der Führungsbahn 32 möglich. Beispielsweise ist eine wellenförmige Ausbildung möglich, wodurch die Transportelemente 33 mit dem Schweißdraht 13 und/oder dem Gewinde 36 in bestimmten Abständen in Wirkverbindung bzw. in Verbindung stehen.

Der Aufbau des Grundkörpers 29 wird nunmehr in den Fig. 10 bis 13 genauer dargestellt und beschrieben. Der Grundkörper 29 ist beispielsweise aus einem einteiligen Körper 40 gebildet, welcher einen konischen Mittelteil 41 und an der konisch verjüngten Seite einen bevorzugt zylindrischen Fortsatz 42 sowie an der gegenüberliegenden Seite des Fortsatzes 42 einen Positionierflansch 45 aufweist. Der Fortsatz 42 ist dabei im Inneren einer Antriebshülse 43 bevorzugt über eine Lageranordnung 44 gelagert, wie aus den Fig. 19 bis 23 ersichtlich ist. Der Positionierflansch 45 hingegen ist bevorzugt rechteckig ausgebildet. Dieser Positionierflansch 45 ist mit einem Halteelement 46 drehfest verbunden. Das Halteelement 46 kann dabei beispielsweise durch einen Gehäuseteil bzw. ein Befestigungselement eines Gerätes, insbesondere des Schweißgerätes 1 oder des Schweißbrenners 10, gebildet sein, so dass die Drahtfördervorrichtung 27 beim Einbau entsprechend befestigt werden kann. Dies ist beispielsweise in Fig. 21 schematisch dargestellt, wobei die Drahtfördervorrichtung 27 in einem Schweißbrennergehäuse 10a eingebaut ist.

Weiters weist der Mittelteil 41 des Grundkörpers 29 eine Führungsnut 48 zur Aufnahme des Elementes 28 auf, wobei bei Anwendung nur eines Elementes 28 der Grundkörper 29 eine Gleit-/Führungsfläche für den Schweißdraht 13 auf der gegenüberliegenden Seite der Führungsnut 48 aufweist. Bevorzugt sind jedoch in dem konisch verjüngten Mittelteil 41 des Grundkörpers 29 in dem dargestellten Ausführungsbeispiel drei Elemente 28 in drei unabhängigen Führungsnuten 48 angeordnet. Die Elemente 28 sind in bevorzugt drei um jeweils 120° winkelversetzte Führungsnuten 48 angeordnet. Innerhalb der Führungsnuten 48 sind die Elemente 28 bevorzugt längs- und/oder höhenverschiebbar angeordnet. Zu diesem Zweck sind die Führungsnuten 48 in Längsrichtung länger ausgebildet als die Elemente 28. Damit ist es nicht mehr notwendig, dass eine Gleit-/Führungsfläche vorhanden ist, da der Schweißdraht 13 zentrisch zwischen den um 120° zueinander angeordneten Elementen 28 verläuft und über die Transportelemente 33 zentrisch positioniert und geführt wird. Im konischen Mittelteil 41 ist des weiteren noch zumindest eine Bohrung 49 angeordnet, in welche die bereits oben erwähnten Führungszapfen 50 eingesetzt werden können,wodurch die Elemente 28 im Grundkörper 29 positioniert und geführt werden. Für jedes Element 28 bzw. für jede Führungsnut 48 wird zumindest eine Bohrung 49 benötigt, da der in dieser Bohrung 49 eingesetzte Führungszapfen 50 das Element 28, insbesondere den Käfig, führt und gleichzeitig vor dem Herausfallen beim Zusammenbau der Drahtfördervorrichtung 27 schützt. Somit weist das Element 28 also eine Führungsnut 48 und der Grundkörper 29 zumindest einen Führungszapfen 50 auf, welcher in die Führungsnut 48 des Elements 28 eingreift. Durch die parallel zur konischen Ausbildung des Gewindes 37 der Antriebshülse 43, des Grundkörpers 29 und des Elements 28 verlaufende Führungsnut 48 wird das Element 28 parallel zu dieser konischen Ausbildung in der Führungsnut 48 verschoben.

Zur Führung des Schweißdrahtes 13 verläuft durch den Grundkörper 29 eine Durchgangsbohrung 51 in welcher die Führungsnuten 48 münden, so dass die Transportelemente 33 bei eingeschobenem Element 28 auf den Schweißdraht 13 einwirken können.

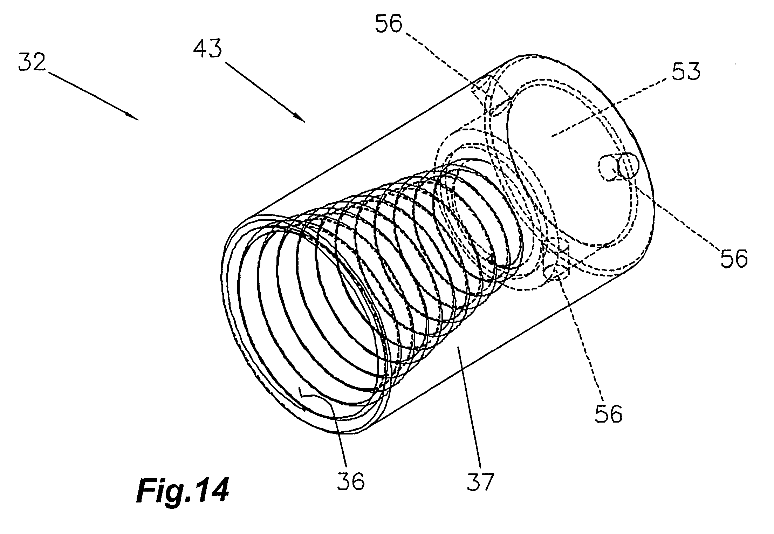

Der Grundkörper 29 mit den im Grundkörper 29 angeordneten Elementen 28 ist in der Antriebshülse 43 bevorzugt zentrisch angeordnet, wobei die Antriebshülse 43 das Antriebsmitttel 37 ausbildet. Eine detaillierte Darstellung der Antriebshülse 43 ist in den Fig. 14 bis 18 dargestellt. In der Antriebshülse 43 ist das Gewinde 36 angeordnet, welches als ein der Kontur der Teile der Drahtfördervorrichtung 27, insbesondere des Elementes 28 mit den Transportelementen 33, des Mittelteils 41, angepasstes, konisches Innengewinde ausgebildet ist, in welches zumindest ein im Element 28 angeordnetes Transportelement 33 eingreift. Der Gewindegang des Gewindes 36 ist also an die Kontur bzw. die Ausmaße bzw. Größe des Transportelementes 33 angepasst. Das als Innengewinde ausgebildete Gewinde 36 verläuft konisch. Der konische Verlauf der einzelnen Teile, wie das Gewinde 36, der Mittelteil 41 und das Element 28, weisen bevorzugt einen Winkel 52 von 5° bis 25° auf. Die Steigung des Gewindes 36 lässt sich somit aus der Größe des Transportelements 33 ableiten, kann natürlich aber auch größer ausgelegt werden. Durch den konischen Verlauf wird in einfacher Form erreicht, dass die einzelnen Teile immer zentrisch zueinander angeordnet bzw. positioniert werden, so dass der Zusammenbau der einzelnen Teile sehr komfortabel und mit geringem Zeitaufwand durchgeführt werden kann. Die Transportelemente 33 können auch aus anderen speziellen Formen ausgebildet sein, wie beispielsweise Rollen, Zylinder, Würfel, Pyramiden, usw.

Gegenüber dem Gewinde 36 ist eine Senkung 53 angeordnet, in welcher die Lageranordnung 44 für den Fortsatz 42 des Grundkörpers 29 angeordnet ist, wie dies in den nachfolgenden Fig. 19 bis 23 ersichtlich und näher erläutert wird. Bevorzugt sind im Bereich der Senkung 53 drei um eine Mittelachse 54 der das Antriebsmittel 37 ausbildenden Antriebshülse 43 um einen Winkel 55 von bevorzugt um 120° versetzte Innengewinde 56 angeordnet. Durch diese Innengewinde 56 kann ein Kupplungselement 47 mit dem Antriebsmittel 37 beispielsweise mittels Wurmschrauben (nicht dargestellt) verbunden werden.

Des weiteren ist mit dem Kupplungselement 47 oder direkt mit der Antriebshülse 43, welche das Antriebsmittel 37 für die Transportelemente 33 ausbildet, ein Antrieb 57, insbesondere ein Elektromotor, verbunden. Natürlich ist es auch möglich, ein Getriebe zwischen dem Antrieb 57 und dem Kupplungselement 47 zwischen zu schalten. Der Antrieb 57 weist in dem dargestellten Ausführungsbeispiel eine Hohlwelle 58 auf, über welche der Antrieb 57 mit dem Kupplungselement 47 verbunden ist und durch welche der Schweißdraht 13 zur Drahtfördervorrichtung 27 durchgeführt werden kann. Der Antrieb 57 ist axial zur Förderrichtung angeordnet. Natürlich kann der Antrieb 57 auch parallel bzw. neben der Drahtfördervorrichtung 27 angeordnet sein, wobei dabei der Schweißdraht 13 nicht mehr durch den Antrieb 57 geführt wird. Bevorzugt wird der Antrieb 57 vor der Drahtfördervorrichtung 27 angeordnet, wodurch beim Einfädelvorgang des Schweißdrahtes 13 dieser zuerst durch den Antrieb 57, also die Hohlwelle 58, geführt wird und anschließend in die Drahtfördervorrichtung 27 eingefädelt wird. Weiters ist der Antrieb 57, insbesondere ein Gehäuse 59 des Antriebs 57, mit einem weiteren Halteelement 60 drehfest verbunden, so dass der Antrieb 57 eine Drehbewegung über die Hohlwelle 58 auf die Antriebshülse 43 ausführen kann, während das Gehäuse 59 starr befestigt ist. Die Antriebshülse 43 wird somit in Rotation versetzt, wodurch über das Gewinde 36 die Transportelemente 33 verschoben werden und der Schweißdraht 13 durch die mit diesem in Wirkverbindung stehenden Transportelemente 33 in eine entsprechende Richtung gefördert wird. Über die Hohlwelle 58 des Antriebes 57 wird also eine Kraft bzw. eine Drehzahl auf die Drahtfördervorrichtung 27 übertragen. Die Drehzahl des Antriebes 57 kann über eine eigene Steuervorrichtung (nicht dargestellt) oder die Steuervorrichtung 4 des Schweißgerätes 1 eingestellt bzw. geregelt werden.

Die durch den Antrieb 57 in Drehung versetzte Drahtfördervorrichtung 27, insbesondere die Antriebshülse 43, fördert also über das Gewinde 36 der Antriebshülse 43 die in dem Element 28 umlaufend angeordneten und in das Gewinde 36 eingreifenden Transportelemente 33. Die Transportelemente 33 werden somit in der in dem Element 28 angeordneten Führungsbahn 32 umlaufend bewegt. Auf der dem Schweißdraht 13 zugewandten Seite 34 des Elementes 28 steht zumindest ein Transportelement 33 mit dem Schweißdraht 13 in Wirkverbindung. Durch die zuvor beschriebene Bewegung der Transportelemente 33 und die Wirkverbindung zwischen den Transportelementen 33 und dem Schweißdraht 13 wird der Schweißdraht 13 in Richtung der bewegten Transportelemente 33 gefördert. Der Schweißdraht 13 wird entsprechend der vom Antrieb 57 durchgeführten Drehrichtung gefördert. Dabei kann sowohl eine Vorwärtsförderung als auch eine Rückwärtsförderung des Schweißdrahtes 13 durchgeführt werden, indem lediglich die Drehrichtung des Antriebes 57 umgekehrt wird.

Weiters kann im Grundkörper 29 ein Druckelement 61 angeordnet sein, welches zwischen dem Positionierflansch 45 des Grundkörpers 29 und dem Element 28 positioniert bzw. angeordnet ist und eine Druckkraft auf das Element 28 ausübt. Das Druckelement 61 kann aus einer Druckscheibe 62 und einer Druckfeder 63 bestehen.Die Druckscheibe 62 überträgt die Kraft der in Schweißförderrichtung des zum Schweißprozess geförderten Schweißdrahtes 13 hinter der Druckscheibe 62 angeordneten Druckfeder 63 auf das Element 28. Im Inneren des Positionierflansches 45 kann eine Scheibe 64 lösbar angeordnet sein, so dass die Druckfeder 63 an der Scheibe 64 abgestützt wird und somit eine Druckkraft auf die Druckscheibe 62 und somit auch auf das Element 28 ausübt. Zum Tausch bzw. Wechsel der Druckfeder 63 kann die Scheibe 64 vom Positionierflansch 45 gelöst werden. Dadurch kann auch eine Anpassung der Druckkraft beispielsweise bei unterschiedlichen Schweißprozessen durch Tausch der Druckfeder 63 vorgenommen werden. Die Scheibe 64 kann auch über ein Gewinde (nicht dargestellt) mit dem Positionierflansch 45 verbunden sein, so dass durch Verdrehen der Scheibe 64 die Druckkraft verändert werden kann. Bei weiter hineingedrehter Scheibe 64 wird die Druckfeder 63 mehr zusammengepresst und somit eine größere Druckkraft auf die Elemente 28 ausgeübt. Durch eine derartige Ausbildung braucht zur Erzielung unterschiedlicher Druckkräfte die Druckfeder 63 nicht mehr ausgetauscht werden, sondern kann durch einfaches Verdrehen der Scheibe 64 eingestellt werden.

Durch das zwischen dem Element 28 und dem Positionierflansch 45 angeordnete Druckelement 61 wird das Element 28 entlang der Führungsnut 38 in Richtung des Fortsatzes 42 verschoben bzw. gedrückt. Damit wird erreicht, dass im Fall wenn kein Schweißdraht 13 in die Drahtfördervorrichtung 27 eingeschoben ist, die Elemente 28 soweit verschoben werden, bis sich die dem Gewinde 36 gegenüberliegenden Transportelemente 33 der einzelnen Elemente 28 berühren, wodurch eine Ausgangsposition definiert ist. Bei Einführung des Schweißdrahtes 13 in die Drahtfördervorrichtung 27 wird das Element 28 nunmehr durch den Schweißdraht 13 in Richtung des Druckelementes 61 gedrückt, so dass eine Aufweitung der Elemente 28, insbesondere der Transportelemente 33, zueinander erfolgt und der Schweißdraht 13 zwischen den Elementen 28 eindringen kann, wodurch die Transportelemente 33 an diesem anliegen. Somit wird eine automatische Anpassung an den Durchmesser des Schweißdrahtes 13 erreicht. Damit ist die erfindungsgemäße Drahtfördervorrichtung 27 für jeden Schweißdraht 13 einsetzbar, unabhängig vom Material sowie der Dicke bzw. des Durchmessers des Schweißdrahtes 13, wie dies aus den Fig. 21 und 22 ersichtlich ist. Gleichzeitig wird über die Druckkraft des Druckelementes 61 Einfluss auf die Krafteinwirkung der Transportelemente 33 auf den Schweißdraht 13 ausgeübt, so dass bei höherer Druckkraft mehr Anpresskraft der Transportelemente 33 auf den Schweißdraht 13 aufgebaut wird.

Bei Fig. 21 wird ein Schweißdraht 13 mit einem kleineren Durchmesser 65 als der bei Fig. 22 eingesetzte Schweißdraht 13 mit einem größeren Durchmesser 66 verwendet. Daraus ist nunmehr ersichtlich, dass die Elemente 28 aufgrund der unterschiedlichen Durchmesser 65, 66 der Schweißdrähte 13 in der Führungsnut 48 verschoben bzw. auseinander gepresst werden.

Ein wesentlicher Vorteil der erfindungsgemäßen Drahtfördervorrichtung 27 liegt darin, dass diese eine sehr kompakte Bauweise aufweist, wobei beispielsweise der Außendurchmesser 67 der Drahtfördervorrichtung 27 bevorzugt zwischen 20mm und 40mm liegt. Die Drahtfördervorrichtung 27 kann somit in handelsüblichen Hand-Schweißbrennern 10, insbesondere in die Griffschale des Hand-Schweißbrenners 10, eingesetzt werden. Somit wird die Drahtförderung wesentlich verbessert und es können auch in einem Hand-Schweißbrenner 10 die Vorzüge einer reaktionsschnellen, und auch reversierenden Drahtfördervorrichtung 27 zum Einsatz kommen. Selbstverständlich ist es möglich, die Drahtfördervorrichtung 27 auch in einem Schweißgerät 1 oder einem externen Drahtvorschubgerät einzusetzen bzw. direkt in ein Schlauchpaket 23 zu integrieren.

Natürlich ist es auch möglich, anstelle von drei Elementen 28, wie in dem vorangegangen Ausführungsbeispiel beschrieben, nur ein Element 28 zu verwenden und an der dem Element 28 zum Schweißdraht 13 gegenüberliegenden Seite eine Führungsfläche auszubilden, über welche der Schweißdraht 13 läuft. Somit wird aufgrund des Druckes, welcher vom Element 28 und den darin angeordneten Transportelementen 33 auf den Schweißdraht 13 wirkt, der Schweißdraht 13 gegen diese Führungsfläche gedrückt und durch die Wirkverbindung zwischen den Transportelementen 33 und dem Schweißdraht 13 wird dieser dann gefördert. Die Führungsfläche kann dabei eben sein, oder aber beispielsweise eine kleine Einbuchtung bzw. eine Führungsnut für den Schweißdraht 13 aufweisen. Somit ist wiederum ein einfacher Aufbau der erfindungsgemäßen Drahtfördervorrichtung 27 geschaffen.

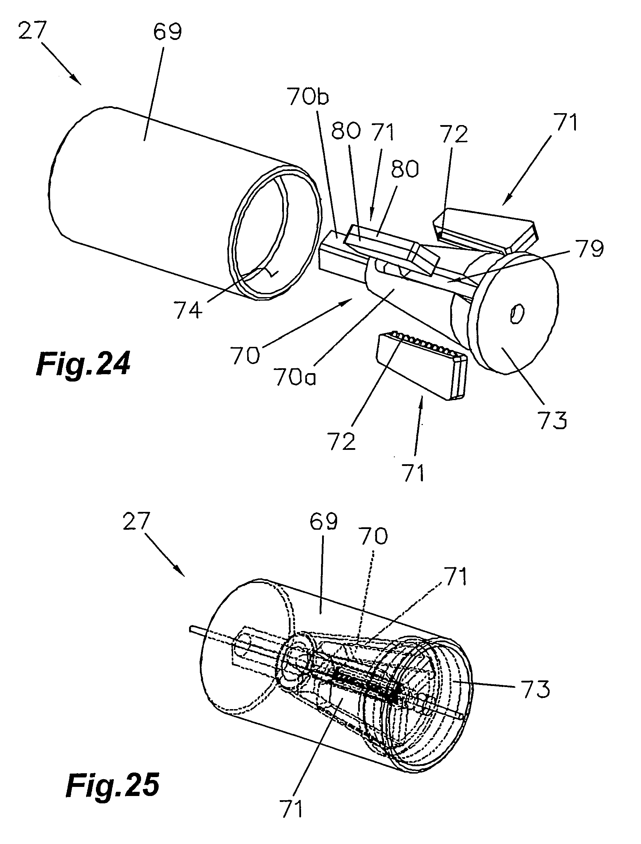

Die erfindungsgemäße Drahtfördervorrichtung 27 kann auch in einer entsprechend den in Fig. 24 bis 28 beschriebenen Art ausgebildet sein.

Die Drahtfördervorrichtung 27 besteht dabei aus einem Hauptelement 69, einem Grundkörper 70, zumindest einem Element 71 mit umlaufend darin angeordneten Transportelementen 72 und einer Antriebsscheibe 73.

Das Hauptelement 69 weist an einer Seite eine Senkung 74 auf, von welcher sich eine konisch verjüngende Bohrung 75 weiter ins Innere des Hauptelements 69 erstreckt. An der konisch verjüngten Seite, also an der gegenüberliegenden Seite der Senkung 74, ist eine weitere Öffnung 76 angeordnet, welche bevorzugt rechteckig ausgebildet ist und in welcher der Grundkörper 70 drehfest angeordnet ist. In der Senkung 74 wird in diesem Ausführungsbeispiel die Antriebsscheibe 73 verdrehbar gelagert.

Der im Inneren des Hauptelements 69 angeordnete Grundkörper 70 ist mit dem Hauptelement 69 drehfest verbunden. Der Grundkörper 70 besteht aus einem konisch ausgebildeten Hauptteil 70a und einem an der konisch verjüngten Seite des Hauptteils 70a angeordneten Fortsatz 70b, welcher bevorzugt rechteckig ausgebildet ist, um den Grundkörper 70 drehfest im Hauptelement 69 anzuordnen. Eine Fixierung des Grundkörpers 70 im Hauptelement 69 kann dabei beispielsweise durch eine, in einer normal zur Mittelachse des Hauptelements 69 angeordneten Bohrung, im Hauptelement 69 angeordneten Wurmschraube erfolgen.

Natürlich ist es auch möglich, den Grundkörper 70 in anderer Art und Weise im Hauptelement 69 anzuordnen. Beispielsweise kann am Grundkörper 70 an der sich konisch verjüngenden Seite des Hauptteils 70a auch eine Welle angeordnet sein und der Grundkörper 70 über diese Welle im Hauptelement 69 positioniert sein, wobei der Grundkörper 70 dann beispielsweise mittels Schrauben drehfest mit dem Hauptelement 69 verbunden ist.

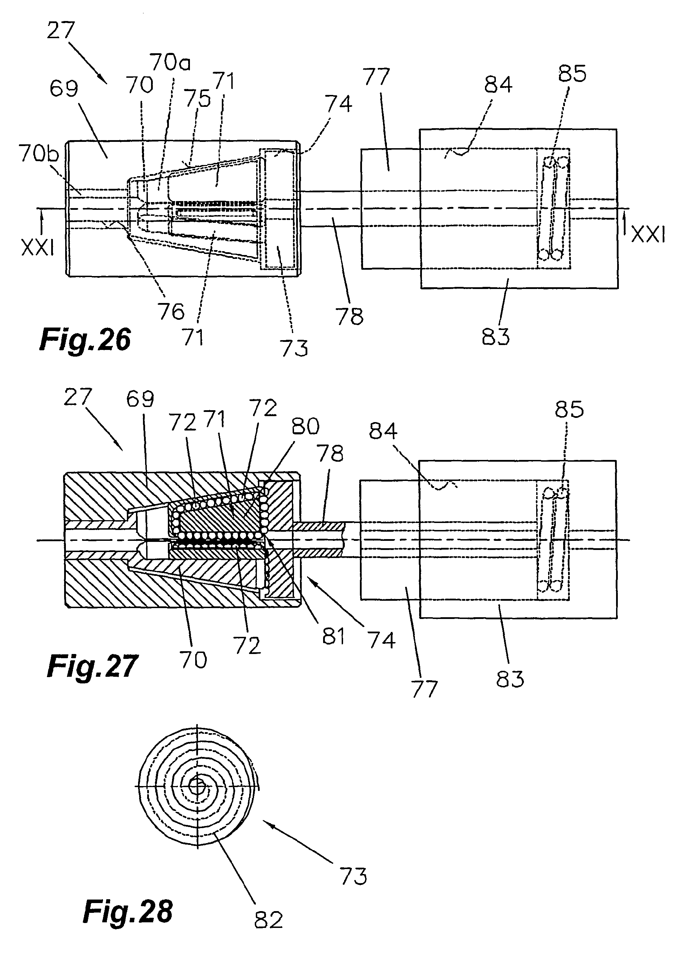

Mit der in der Senkung 74 des Hauptelementes 70 angeordneten Antriebsscheibe 73 ist ein Motor, insbesondere ein Antrieb 77 verbunden. Der Antrieb 77 kann dabei durch jeden beliebigen, aus dem Stand der Technik bekannten Motor gebildet sein. Der Antrieb 77 weist eine Hohlwelle 78 auf, welche in Drahtförderrichtung durch den Antrieb 77 verläuft. Über die Hohlwelle 78 ist der Antrieb 77 mit der Antriebsscheibe 73 verbunden. Hierzu ist korrespondierend zur Hohlwelle 78 der Grundkörper 70 und ein Fortsatz 70b ausgebildet, um den Schweißdraht 13 im Zentrum der Drahtfördervorrichtung 27 und dem Antrieb 77 hindurchzuführen. Im Inneren des Hauptelementes 69, also in der sich konisch verjüngenden Bohrung 75 des Hauptelements 69, und in einer Längsnut 79 des Grundkörpers 70 ist das Element 71 angeordnet. Das Element 71 setzt sich dabei aus 2 Halbschalen 80 zusammen, in welchen eine Führungsbahn 81 eingearbeitet ist und in welcher die Transportelemente 72 umlaufend angeordnet sind. Zumindest ein Transportelement 72 greift dabei in die Antriebsscheibe 73 ein. Die Antriebsscheibe 73 treibt die Transportelemente 72 mittels eines Gewindeganges 82, welcher schneckenförmig vom Mittelpunkt der Antriebsscheibe 73 aus in die Antriebsscheibe 73 eingearbeitet, beispielsweise gefräst, ist (s. Fig. 28) an und verschiebt die Transportelemente 72 entlang der Führungsbahn 81. Die Führungsbahn 81 des Elements 71 für die Transportelemente 72 ist an zumindest zwei Seiten des Elements 71 teilweise außerhalb des Elements 71 angeordnet, so dass die Transportelemente 72 an diesen Seiten teilweise aus dem Element 71 herausragen. Somit greift an einer der Antriebsscheibe 73 zugewandten Seite des Elements 71 zumindest ein Transportelement 72 in den Gewindegang 82 der Antriebsscheibe 73 ein und an einer dem Schweißdraht 13 zugewandten Seite steht zumindest ein Transportelement 72 mit dem Schweißdraht 13 in Wirkverbindung. Durch die Drehung der Antriebsscheibe 73 wird dann das in den Gewindegang 82 eingreifende Transportelement 72 entlang der Führungsbahn 81 durch den Gewindegang 82 verschoben. Somit werden alle Transportelemente 72 entlang der Führungsbahng 81 verschoben und der Schweißdraht 13 durch das bzw. die mit dem Schweißdraht 13 in Wirkverbindung stehenden Transportelemente 72 gefördert, da diese einen Anpressdruck auf den Schweißdraht 13 ausüben und aufgrund der Verschiebung aller Transportelemente 72 der Schweißdraht 13 aufgrund der Reibung mitbewegt wird.

Durch diese Ausbildung der erfindungsgemäßen Drahtfördervorrichtung 27 können die Ausmaße der Drahtfördervorrichtung 27 sehr klein gehalten werden, da aufgrund der Hohlwelle 78 des Antriebs 77 der Schweißdraht 13 durch den Antrieb 77 gefördert wird und der Antrieb 77 in einer Achse mit der Drahtfördervorrichtung 27 angeordnet ist. Natürlich ist es auch möglich, den Antrieb 77 seitlich versetzt anzuordnen, wobei dann über beispielsweise Zahnräder oder einem Keilriemen die Kraft bzw. das Moment des Antriebs 77 auf die Drahtfördervorrichtung 27 übertragen werden kann, wodurch allerdings die Drahtfördervorrichtung 27 nicht mehr leicht in einem Hand-Schweißbrenner 10 angeordnet, jedoch in dem Schweißgerät 1 oder außerhalb der Schweißanlage problemlos eingesetzt werden kann.

Um eine Verstellung bei verschiedenen Schweißdrahtdurchmessern auf den tatsächlich eingesetzten Schweißdraht 13 zu erreichen, ist der Antrieb 77 in einem Halteelement 83 drehfest angeordnet (s. Fig. 26 und 27). Die drehfeste Anordnung kann wiederum auf verschiedenste Art und Weise realisiert werden, beispielsweise durch eine bevorzugt rechteckige Ausbildung einer Öffnung 84 im Halteelement 83, in welche der Antrieb 77 eingeschoben wird. Das hier schematisch dargestellte Halteelement 83 kann dabei ein Befestigungsblech bzw. Befestigungsklemmen oder Rippen eines Gehäuses vom Schweißbrenner 10 oder dem Schweißgerät 1 ausbilden. In der bevorzugt rechteckigen Öffnung 84 kann zwischen dem Antrieb 77 und dem Abschluss der Öffnung 84 eine Feder 85 angeordnet sein, über welche sich die Drahtfördervorrichtung 27 automatisch auf den eingeschobenen Schweißdraht 13 einstellt, wodurch vom Benutzer keinerlei Änderung bzw. Einstellungen an der Drahtfördervorrichtung 27 vorgenommen werden müssen, wenn ein anderer Schweißdraht 13 mit anderem Durchmesser eingesetzt wird. Dabei werden beim Einschieben des Schweißdrahtes 13 die Elemente 71 aufgrund der konischen Ausbildung der Drahtfördervorrichtung 27 vom Schweißdraht 13 weg und des weiteren in Richtung des Antriebes 77 gedrückt bzw. verschoben. Somit wird durch die Feder 85 ein Druck auf die Antriebsscheibe 73 und somit auf die Elemente 71 ausgeübt, wodurch diese, wiederum wegen der konischen Ausbildung der Drahtfördervorrichtung 27, den Druck weiter auf den Schweißdraht 13 übertragen und somit dieser aufgrund der Wirkverbindung zwischen dem Schweißdraht 13 und den im Element 71 angeordneten Transportelementen 72 gefördert wird. Der Antrieb 77 kann auch starr an einem Gehäuse bzw. an den Halteelementen 83 ohne Feder 85 bzw. Druckelement befestigt werden, wobei jedoch die Drahtfördervorrichtung 27, also das Hauptelement 69, federnd befestigt wird, so dass dieses in Richtung des Antriebes 77 gepresst wird. In diesem Fall wirkt die Feder 85 bzw. ein anderes Druckelement auf die dem Antrieb 77 gegenüberliegende Stirnfläche der Drahtfördervorrichtung 27 ein und die Elemente 71 werden mit den Transportelementen 72 gegen die Antriebsscheibe 73 gedrückt. Somit wird wiederum ein sicherer Eingriff der Transportelemente 72 in den Gewindegang 82 erreicht und gleichzeitig können sich die Elemente 71 an die unterschiedlichen Durchmesser der Schweißdrähte 13 automatisch anpassen. Die Befestigung bzw. Lagerung der Drahtfördervorrichtung 27 ist bei diesem Ausführungsbeispiel nicht dargestellt. Diese kann in einfacher Form wiederum derart erfolgen, dass die Drahtfördervorrichtung 27 an einem entsprechend ausgebildeten Halteelement 83 oder einem Gehäuseteil bzw. Befestigungsrippen verschraubt werden.

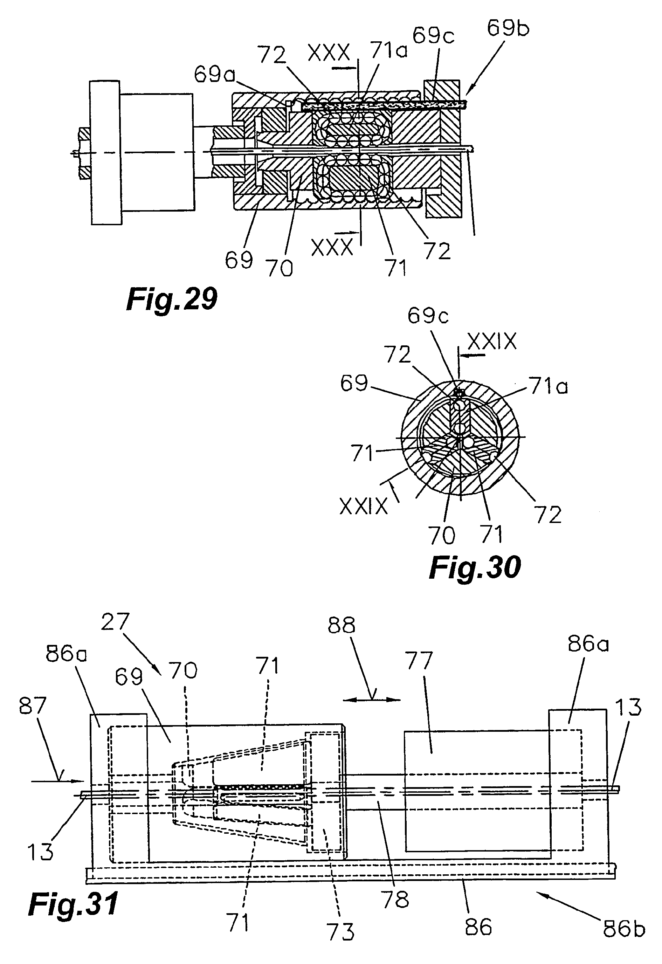

In den Fig. 29 und 30 ist ein weiteres Ausführungsbeispiel der erfindungsgemäßen Drahtfördervorrichtung 27 beschrieben und schematisch dargestellt.

Dabei zeigen die Fig. 29 und 30 eine Zusammenstellung der erfindungsgemäßen Drahtfördervorrichtung 27, wobei in diesem Ausführungsbeispiel nur ein Element 71a zu dem Schweißdraht 13 beweglich im Grundkörper 70 angeordnet ist, während zwei weitere Elemente 71 starr im Grundkörper 70 positioniert sind. In den Elementen 71, 71a sind umlaufend Transportelemente 72 angeordnet, welche auf einer Seite des Elementes 71 auf den Schweißdraht 13 einwirken und auf der gegenüberliegenden Seite in ein Gewinde 69a des Hauptelements 69 eingreifen. Dabei greifen nur die Transportelemente 72 der starr angeordneten Elemente 71 in das Gewinde 69a bzw. den Gewindegang des Gewindes 69a ein. Das dritte Element 71a ist beweglich angeordnet und wird von einem Druckelement 69b, welches beispielsweise durch eine Druckfeder oder einem Druckschlauch 69c, welcher beispielsweise über Druckluft angesteuert werden kann, mit dem benötigten Druck in Richtung des Schweißdrahtes 13 gedrückt. Somit ist eine gegenüber den vorher beschriebenen Drahtfördervorrichtungen 27 wesentlich vereinfachte Ausführungsform geschaffen. Natürlich ist es auch möglich, im Druckschlauch 69c Flüssigkeiten oder Gase oder ähnliche vorteilhafte Medien einzusetzen.

Wesentlich bei dieser Ausführung der erfindungsgemäßen Drahtfördervorrichtung 27 ist, dass nur ein Element 71a einen Druck auf den Schweißdraht 13 ausübt und somit mit diesem in Wirkverbindung steht, während zwei weitere Elemente 71 starr im Grundkörper 70 angeordnet sind und lediglich durch die in das Gewinde 69a des Hauptelements 69 eingreifende Transportelemente 72 und der Wirkverbindung zwischen dem Schweißdraht 13 und den Transportelementen 72 den Schweißdraht 13 fördern. Dadurch muss beispielsweise bei unterschiedlichem Durchmesser des Schweißdrahtes 13 lediglich der Schweißdraht 13 in Richtung der Mitte der Drahtfördervorrichtung 27 verschoben werden, wodurch der Schweißdraht 13 zwar in der Drahtfördervorrichtung 27 außer mittig verläuft, dies aber auf den Schweißprozess keine Auswirkungen hat. Natürlich ist es auch möglich ein Element 71 starr und zwei Elemente 71a beweglich zu dem Schweißdraht 13 hin anzuordnen.

In Fig. 31 ist ein weiteres Ausführungsbeispiel dargestellt, bei dem eine reversierende Bewegung des Schweißdrahtes 13 ohne Richtungsumkehr des Antriebes 77 erreicht wird. Die Drahtfördervorrichtung 27 ist dabei axial zur Drahtfördervorrichtung 27 beweglich anzuordnen. Dies kann beispielsweise durch eine Anordnung der Drahtfördervorrichtung 27 auf einer Führungsschiene 86 realisiert werden. Dabei sind die Drahtfördervorrichtung 27, sowie der Antrieb 77, beweglich auf der Führungsschiene 86 angeordnet. Die Führungsschiene 86 kann als Schwalbenschwanzführung ausgebildet sein, wobei die Drahtfördervorrichtung 27 und der Antrieb 77 über speziell ausgebildete Halteelemente 86a auf der Führungsschiene 86 gelagert werden, so dass eine Längsverschiebung der gesamten Einheit vorgenommen werden kann. Dabei ist es möglich, die einzelnen Teile, wie die Drahtfördervorrichtung 27 und der Antrieb 77, in einem Halterahmen 86b einzubauen. Der Halterahmen 86b ist auf der Führungsschiene 86 in Längsrichtung verstellbar gelagert. Somit wird der Schweißdraht 13 von der Drahtfördervorrichtung 27 nur in eine Richtung entsprechend dem Pfeil 87 gefördert, während die gesamte Einheit, also der Halterahmen 86b mit der Drahtfördervorrichtung 27 und dem Antrieb 77, zu den jeweiligen, erforderlichen Zeitpunkten eine Bewegung in die entgegengesetzte Richtung und wieder zurück durchführt - Pfeil 88 - , so dass bei dem Rückwärtstransport des Halterahmens 86b der Schweißdraht 13 auch bei einer Förderung des Schweißdrahtes 13 von der Drahtfördervorrichtung 27 in Richtung des Werkstückes 16 vom Werkstück 16 wegbewegt wird. Dies kann beispielsweise von einer Steuervorrichtung, welche einen Motor, bzw. einen Antrieb ansteuert, geregelt bzw. gesteuert werden, allerdings sind die beschriebene Steuervorrichtung sowie der Antrieb nicht dargestellt. Selbstverständlich kann ein derartiger Aufbau mit dem Halterahmen 86b bei allen beschriebenen Ausführungsbeispielen eingesetzt werden, so dass ein Modul geschaffen werden kann, in dem sämtliche Teile angeordnet sind. Damit wird eine einfach Montage der Drahtfördereinheit, bzw. der Drahtfördervorrichtung 27 erreicht, da nur mehr der Halterahmen 86b an einer Montageplatte bzw. einem Gehäuse im.Schweißgerät 1 oder im Schweißbrenner 10 befestigt werden muss. Anschließend muss nur mehr die Verkabelung durchgeführt werden. Somit ist auch ein einfacher Tausch des gesamten Moduls möglich.

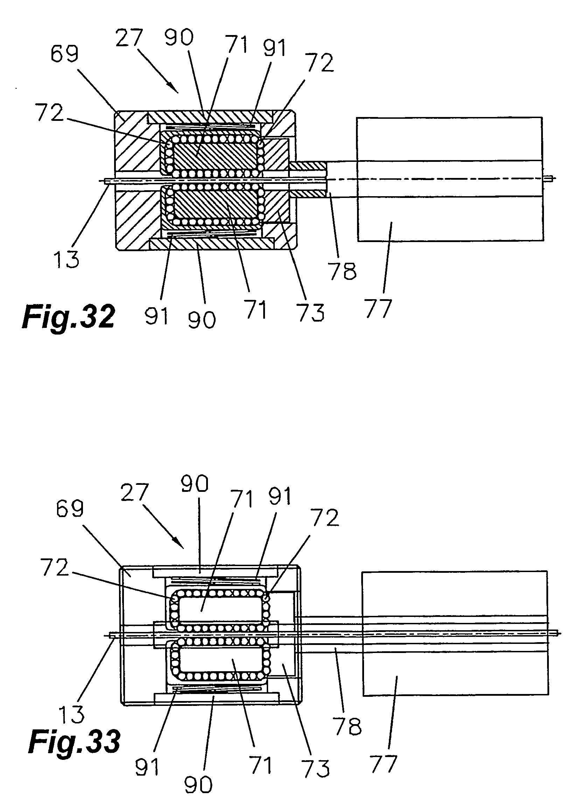

Eine weitere Ausbildung der erfindungsgemäßen Drahtfördervorrichtung 27 ist in den Fig. 32 und 33 dargestellt. Der Schweißdraht 13 wird wiederum durch die mit dem Schweißdraht 13 in Wirkverbindung stehenden Transportelemente 72 gefördert. Die Transportelemente 72 sind im Element 71 umlaufend angeordnet und greifen auf einer der Antriebsscheibe 73 zugewandten Seite in den Gewindegang 82 der Antriebsscheibe 73 ein, welcher in diesem Ausführungsbeispiel wiederum als Führungsschnecke ausgebildet ist.

Das Element 71 ist dabei in Richtung des Schweißdrahtes 13, also normal auf den Schweißdraht 13, verstellbar in einer Führungsnut 89 angeordnet. Zwischen dem Element 71 und einer Abdeckung 90 kann eine Druckfeder 91 angeordnet sein, durch welche das Element 71 in Richtung des Schweißdrahtes 13 gedrückt wird. Somit werden bei nicht eingeschobenen Schweißdraht 13 die Elemente 71 so zueinander verschoben, dass die in den Elementen 71 umlaufend angeordneten Transportelemente 72, einander berühren. Beim Einfädeln des Schweißdrahtes 13 werden die Elemente 71 vom Schweißdraht 13 auseinandergeschoben. Aufgrund der im Hauptelement 69 zwischen der Abdeckung 90 und dem Element 71 angeordneten Druckfeder 91 werden die Elemente 71 mit einer vordefinierten Druckkraft auf den Schweißdraht 13 gedrückt. Somit ist eine automatische Anpassung bzw. Einstellung der Drahtfördervorrichtung 27 an den jeweils eingeschobenen Schweißdraht 13 in einfacher Art und Weise gewährleistet. Des weiteren ist bei einem Schweißdrahtwechsel keine Umrüstarbeit notwendig.

Bei diesem Ausführungsbeispiel ist es vorteilhaft, dass die Drahtfördervorrichtung 27 aus wenigen Einzelteilen gebildet wird. Zum Unterschied zu den zuvor beschriebenen Ausführungsvarianten kann bei diesem Ausführungsbeispiel der Grundkörper 29 bzw. 70 eingespart werden.

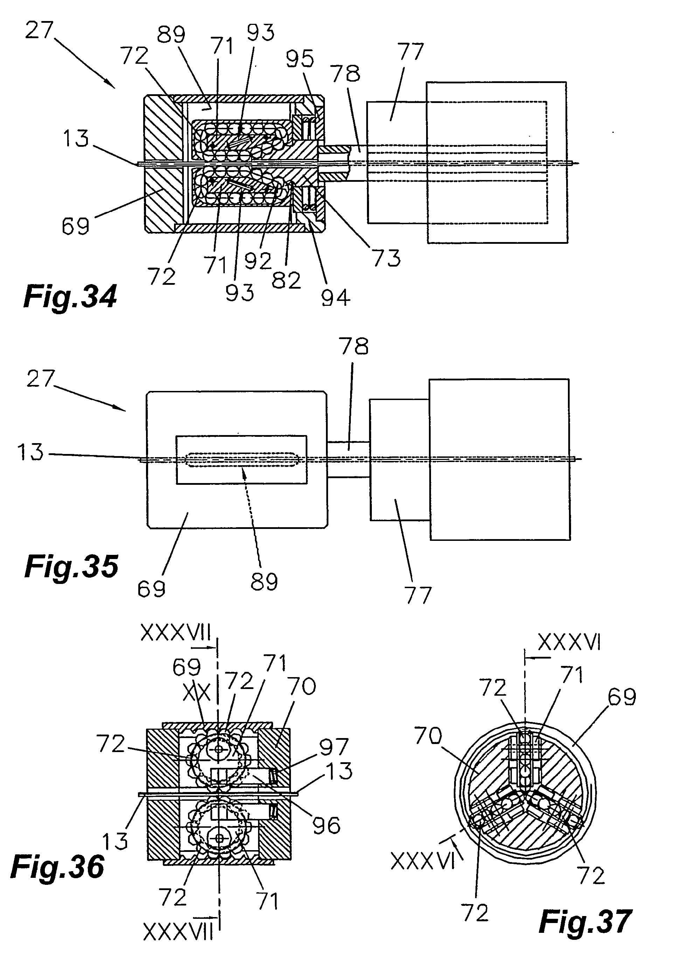

Eine weitere Ausführungsvariante der erfindungsgemäßen Drahtfördervorrichtung 27 ist in den Fig. 34 und 35 dargestellt, wobei die Antriebsscheibe 73 konisch ausgebildet ist und somit ein konisch verlaufendes Gewinde 92 aufweist, in welches die Transportelemente 72 des Elements 71 eingreifen. Das Element 71 ist dabei über die Führungsnut 89 beweglich im Hauptelement 69 angeordnet. Entlang einer weiteren Führungsnut 93, welche im Element 71 angeordnet ist und in welche beispielsweise Passstifte des Hauptelements 69 eingreifen, wird das Element 71 verstellt bzw. verschoben.

Im Hauptelement 69 ist des weiteren ein Druckelement 94 zwischen dem Element 71 und einer Druckscheibe 95 angeordnet, welches eine Druckkraft auf das Element 71 ausübt und somit eine automatische Einstellung auf den jeweiligen, eingeschobenen Schweißdraht 13 ermöglicht.

Des weiteren muss noch erwähnt werden, dass die Antriebsscheibe 73 mit der Hohlwelle 78 des Antriebs 77 verbunden ist und somit nur die Antriebsscheibe 73 im Hauptelement 69 drehbar gelagert ist. Dadurch sind einzig das Element 71 und die Antriebsscheibe 73 geringem Verschleiß unterworfen, wodurch die Lebensdauer der erfindungsgemäßen Drahtfördervorrichtung 27 gegenüber anderen Ausführungsformen wesentlich erhöht ist und außerdem bei Verschleiß der Antriebsscheibe 73 sowie des Elements 71 ein einfacher Wechsel möglich ist.

Der Antrieb 77 sowie das Hauptelement 69 werden drehfest beispielsweise in einem Handschweißbrenner angeordnet. Natürlich ist es nicht zwingend notwendig, die erfindungsgemäße Drahtfördervorrichtung 27 in einem Handschweißbrenner anzuordnen, dies kann auch in einem Schweißgerät 1, im Schlauchpaket 23 oder außerhalb der Schweißanlage erfolgen.

Um eine automatische Verstellung bzw. Einstellung auf den jeweiligen, verwendeten Schweißdraht 13 zu gewährleisten, ist es auch möglich, die Transportelemente 72 in zumindest einem Element 71 anzuordnen, welches beispielsweise als Exzenter ausgebildet ist, wie dies in den Fig. 36 und 37 schematisch dargestellt ist.

Dabei sind die Transportelemente 72 wiederum umlaufend im Element 71 angeordnet, wobei bei diesem Ausführungsbeispiel die Transportelemente 72 teilweise aus dem Element 71 ragen. Das Element 71 ist bei diesem Ausführungsbeispiel oval ausgebildet und mittels einem Passstift exzentrisch im Hauptelement 69 gelagert, d.h., dass bei nicht eingeschobenen Schweißdraht 13 die dem Schweißdraht 13 zugewandten Transportelemente 71 einander berühren. Wenn nun ein Schweißdraht 13 eingeschoben wird, werden die Elemente 71 aufgrund des Schweißdrahtes 13 auseinandergedrückt, wobei der Drehpunkt im Mittelpunkt des Passstiftes liegt. Mittels eines Druckelementes 96 wird das exzentrisch gelagerte Element 71 in Richtung des Schweißdrahtes 13 gedrückt, wodurch wiederum eine von der Drahtfördervorrichtung 27 durchgeführte, automatische Einstellung auf den jeweilig verwendeten Schweißdraht 13 erfolgt. Das Druckelement 96 ist dabei im Grundkörper 70 beweglich gelagert und wird über eine Druckfeder 97, welche zwischen dem Grundkörper 70 und dem Druckelement 96 angeordnet ist, in Richtung des Elements 71 gedrückt.

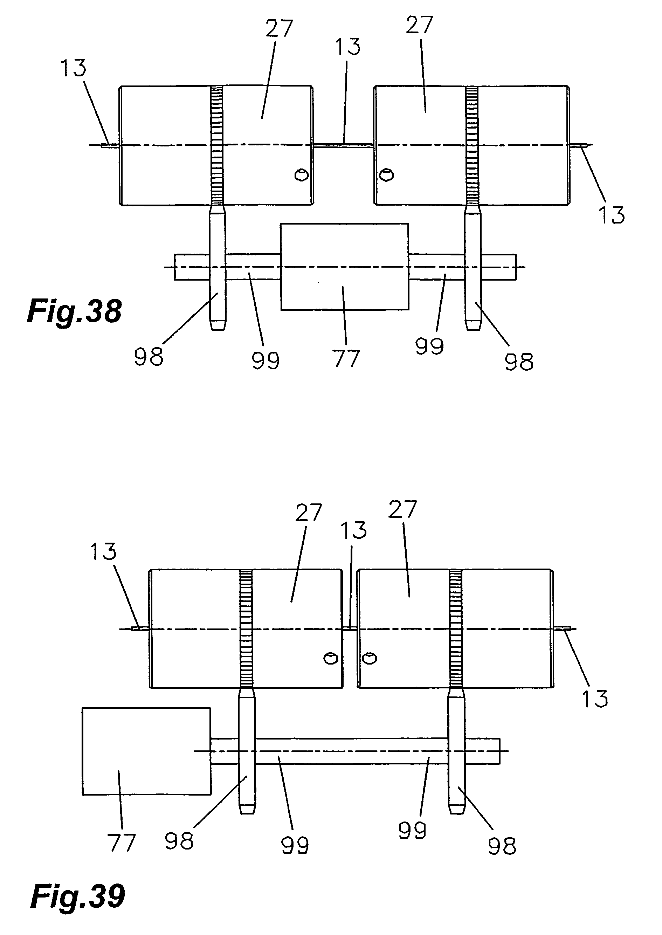

In den Fig. 38 und 39 ist ein weiteres Ausführungsbeispiel der erfindungsgemäßen Drahtfördervorrichtung 27 schematisch dargestellt, wobei zwei Drahtfördervorrichtungen 27 in Drahtförderrichtung hintereinander und ein gemeinsamer Antrieb 77 seitlich versetzt zu den Drahtfördervorrichtungen 27 angeordnet ist.

Wesentlich bei dieser Ausbildung ist, dass der Antrieb 77 parallel zu den Drahtfördervorrichtungen 27 seitlich versetzt angeordnet ist und die Drahtfördervorrichtungen 27 beispielsweise über einen Zahnriemen, Keilriemen oder einem Zahnrad 98 vom Antrieb 77 angetrieben wird. Dabei weist der Antrieb 77 eine Welle 99 an beiden Seiten des Antriebs 77 auf, wobei an der Welle 99 jeweils ein Zahnrad 98 angeordnet ist, welches dann mit der Drahtfördervorrichtung 27 in Wirkverbindung steht, wobei dies beispielsweise über eine Verzahnung entlang des Umfangs der Drahtfördervorrichtung 27 erfolgt.

Somit wird in einfacher Art und Weise erreicht, dass durch zwei hintereinander angeordnete Drahtfördervorrichtungen 27 die doppelte Anzahl von Transportelementen 72 auf den Schweißdraht 13 drücken und somit ein noch besserer und sicherer Transport des Schweißdrahtes 13 möglich ist.

In Fig. 39 ist der Antrieb 77 wiederum parallel zu den Drahtfördervorrichtungen 27 seitlich versetzt angeordnet, allerdings weist der Antrieb 77 hierbei nur eine Welle 99 auf, auf welcher zwei Zahnräder 98 zum Antreiben der Drahtfördervorrichtung 27 angeordnet sind.

Natürlich ist es auch möglich, den Antrieb 77 normal zur Drahtfördervorrichtung 27 anzuordnen, wobei lediglich über beispielsweise schrägverzahnte Zahnräder 98 das Moment umgelenkt und auf die Drahtfördervorrichtung 27 übertragen wird.

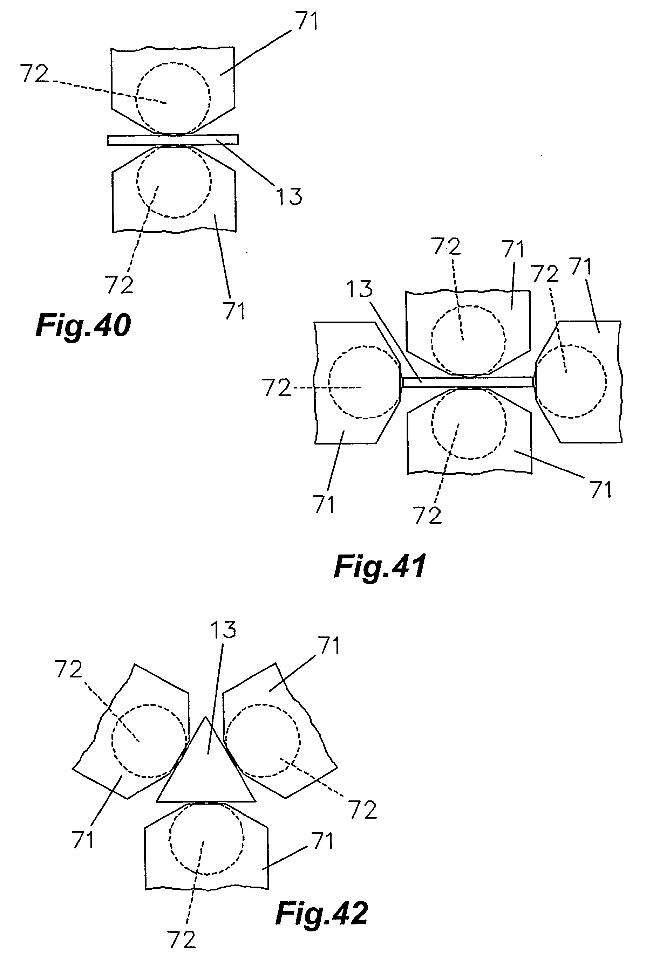

In den nachfolgenden Fig. 40 bis 42 sind verschiedene Ausführungsbeispiele der erfindungsgemäßen Drahtfördervorrichtung 27 für verschiedene Arten von Schweißdrähten 13 schematisch dargestellt. Die Darstellungen entsprechen dabei einem schematischen Detailausschnitt des Schweißdrahtes 13 mit den um den Schweißdraht 13 angeordneten Elementen 71 sowie den in den Elementen 71 umlaufend angeordneten Transportelementen 72.

Fig. 40 zeigt eine Anwendung für einen Schweißdraht 13, welcher als Flachdraht ausgebildet ist, wobei zumindest zwei Elemente 71 mit den darin umlaufend angeordneten Transportelementen 72 an beiden Flachseiten des Schweißdrahtes 13 gegenüberliegend angeordnet sind.

Natürlich können auch vier Elemente 71 angeordnet werden, wie dies in Fig. 41 dargestellt ist. Nachteilig ist hierbei lediglich, dass von den an den Schmalseiten des Schweißdrahtes 13 angeordneten Elementen 71 nur eine dem Schweißdraht 13 angepasste Kraft auf den Schweißdraht 13 einwirken darf, da ansonsten der Schweißdraht 13 deformiert wird.

In Fig. 42 wird ein Schweißdraht 13 mit einem dreieckigen Querschnitt schematisch dargestellt. Dabei ist an jeder Seite des Schweißdrahtes 13 jeweils ein Element 71 vorzugsweise normal zur jeweiligen Seite des Schweißdrahtes 13 angeordnet.

Für die Drahtförderung ist eine kugelförmige Ausbildung der Transportelemente 33, 72 nicht zwingend notwendig, sie stellt aber die am einfachsten auszuführende Form des Transportelementes 33, 72 mit der geringsten Reibung dar.

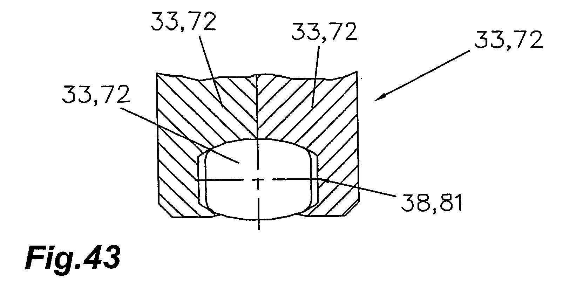

In Fig. 43 ist ein Transportelement 33, 72 schematisch dargestellt, welches beispielsweise eine länglich-ovale Form aufweist. Das Element 28, 71 besteht wiederum aus zwei Halbschalen 30, 80, wobei die Transportelemente 33, 72 in einer umlaufenden Führungsnut 38 bzw. Führungsbahn 81 angeordnet sind. Natürlich kann das Transportelement 33, 72 verschiedenartig ausgebildet sein, um einen Transport bzw. eine Förderung des Schweißdrahtes 13 zu gewährleisten.

Um die Drahtfördergeschwindigkeit messen bzw. ermitteln zu können, können an der Stirnseite der Drahtfördervorrichtung 27 Mittel zur Messung der Umdrehungen der Drahtfördervorrichtung 27 angeordnet werden. Beispielsweise kann dies über optische Sensoren erfolgen, welche lediglich eine Hell/Dunkel Erkennung aufweisen und über entsprechende Markierungen an der Stirnseite der Drahtfördervorrichtung 27 die Umdrehung ermitteln. Über die Umdrehungszahl kann dann über eine bekannte Berechungsformel die Drahtfördergeschwindigkeit berechnet werden.

Abschließend muss noch erwähnt werden, dass nur eine begrenzte Anzahl von Elementen 28, 71 zur Drahtförderung eingesetzt werden kann, da der Außendurchmesser des Schweißdrahtes 13 lediglich zwischen 0,7 mm und 3,2 mm beträgt und somit die Größe der Transportelemente 33, 72 verändert werden muss, damit mehrere Elemente 28, 71 mit den darin angeordneten Transportelementen 33, 72 rund um den eingesetzten Schweißdraht 13 Platz finden. Somit würden beispielsweise bei fünf um den Schweißdraht 13 mit rundem Querschnitt angeordneten Elementen 28, 71 die Transportelemente 33, 72 einander berühren, bevor die Transportelemente 33, 72 mit dem Schweißdraht 13 in Kontakt treten und dadurch keine Wirkverbindung zwischen den Transportelementen 33, 72 und dem Schweißdraht 13 entsteht.

## Patentansprüche

1. Drahtfördervorrichtung zum Transport eines Schweißdrahtes (13) von einem Drahtvorrat zu einer Verbraucherstelle, mit zumindest einem Element (28) zur Führung des Schweißdrahtes (13), wobei zumindest ein Führungselement (28) mit einer Führungsbahn (32) vorgesehen ist, entlang welcher mehrere Transportelemente (33) verschiebbar gelagert sind, wobei weiters zumindest ein Transportelement (33) mit einem Antriebsmittel (37) und zumindest ein weiteres Transportelement (33) mit dem Schweißdraht (13) kraft- und/oder formschlüssig verbunden ist, **dadurch gekennzeichnet, dass** zumindest ein Führungselement (28) zur Anpassung an den Durchmesser des Schweißdrahtes (13) verschiebbar angeordnet ist.

2. Drahtfördervorrichtung nach Anspruch 1, **dadurch gekennzeichnet, dass** zumindest ein Führungselement (28) in einem Grundkörper (29) verschiebbar angeordnet ist.

3. Drahtfördervorrichtung nach Anspruch 1 oder 2, **dadurch gekennzeichnet, dass** mehrere Führungselemente (28) vorgesehen sind.

4. Drahtfördervorrichtung nach Anspruch 3, **dadurch gekennzeichnet, dass** drei vorzugsweies um 120° winkelversetzte Führungselemente (28) um den Schweißdraht (13) angeordnet sind.

5. Drahtfördervorrichtung nach einem der Ansprüche 2 bis 4, **dadurch gekennzeichnet, dass** der Grundkörper (29) mit dem zumindest einen Führungselement (28) in einer Antriebshülse (43) bevorzugt zentrisch angeordnet ist, wobei das Antriebsmittel (37) durch diese Antriebshülse (43) gebildet ist.

6. Drahtfördervorrichtung nach Anspruch 5, **dadurch gekennzeichnet, dass** die Antriebshülse (43) mit einem der Kontur des Transportelementes (33) angepasstem Innengewinde ausgebildet ist, in welches zumindest ein Transportelement (33) eingreift.

7. Drahtfördervorrichtung nach Anspruch 6, **dadurch gekennzeichnet, dass** das Innengewinde der Antriebshülse (43), der Grundkörper (29) und das Fürhungselement (28) bevorzugt konisch ausgebildet sind.

8. Drahtfördervorrichtung nach Anspruch 6 oder 7, **dadurch gekennzeichnet, dass** der Grundkörper (29) einen vorzugsweise zylindrischen Fortsatz (42) aufweist, der im Inneren der Antriebshülse (43) vorzugsweise über eine Lageranordnung (44) gelagert ist.

9. Drahtfördervorrichtung nach Anspruch 8, **dadurch gekennzeichnet, dass** der Grundkörper (29) an der dem Fortsatz (42) gegenüberliegenden Seite einen bevorzugt rechteckig ausgebildeten Positionierflansch (45) aufweist.

10. Drahtfördervorrichtung nach Anspruch 9, **dadurch gekennzeichnet, dass** der Positionierflansch (45) mit einem Halteelement (46) drehfest verbunden ist.

11. Drahtfördervorrichtung nach Anspruch 10, **dadurch gekennzeichnet, dass** die Antriebshülse (43) mit einem Kupplungselement (47) verbunden ist, wobei das Kupplungselement (47) an der gegenüberliegenden Seite des Halteelementes (46) angeordnet ist.

12. Drahtfördervorrichtung nach Anspruch 11, **dadurch gekennzeichnet, dass** das Kupplungselement (47) oder die Antriebshülse (43) direkt mit einem Antrieb (57), insbesondere einem Elektromotor, verbunden ist.

13. Drahtfördervorrichtung nach Anspruch 12, **dadurch gekennzeichnet, dass** der Antrieb (57) axial zur Drahtfördervorrichtung (27) angeordnet ist.

14. Drahtfördervorrichtung nach Anspruch 13, **dadurch gekennzeichnet, dass** der Antrieb (57) eine Hohlwelle (58) aufweist, die mit dem Kupplungselement (47) verbunden ist und durch die der Schweißdraht (13) zur Drahtfördervorrichtung (27) durchführbar ist.

15. Drahtfördervorrichtung nach einem der Ansprüche 12 bis 14, **dadurch gekennzeichnet; dass** der Antrieb (57), insbesondere ein Gehäuse (59) des Antriebes (57), drehfest mit einem weiteren Halteelement (60) verbunden ist.

16. Drahtfördervorrichtung nach einem der Ansprüche 2 bis 15, **dadurch gekennzeichnet, dass** im Grundkörper (29) ein Druckelement (61) angeordnet ist, welches zwischen dem Positionierflansch (45) und dem Führungselement (28) positioniert ist und eine Druckkraft auf das Führungselement (28) ausübt.

17. Drahtfördervorrichtung nach einem der Ansprüche 2 bis 16, **dadurch gekennzeichnet, dass** das Führungselement (28) eine Führungsnut (38) aufweist und am Grundkörper (29) zumindest ein Führungszapfen (50) angeordnet ist, welcher in die Führungsnut (38) des Führungselements (28) eingreift.

18. Drahtfördervorrichtung nach einem der Ansprüche 1 bis 17, **dadurch gekennzeichnet, dass** das Transportelement (33) in Form einer Kugel ausgebildet ist.

19. Drahtfördervorrichtung nach einem der Ansprüche 5 bis 18, **dadurch gekennzeichnet, dass** die Antriebshülse (43) einen Außendurchmesser (67) zwischen 20 mm und 30 mm aufweist.

20. Drahtfördervorrichtung nach einem der Ansprüche 1 bis 19, **dadurch gekennzeichnet, dass** die Drahtfördervorrichtung (27) in einem Schweißbrenner (10) und/oder einem Schweißgerät (1) angeordnet ist.

21. Verfahren zum Fördern eines Schweißdrahtes (13) von einem Drahtvorrat zu einer Verbraucherstelle, wobei der Schweißdraht (13) durch zumindest ein Element (28) geführt wird, und wobei mehrere Transportelemente (33) in zumindest einem Führungselement (28) entlang einer Führungsbahn (32) umlaufend geführt werden, wobei zumindest ein Transportelement (33) an einer dem Schweißdraht (13) zugewandten Seite des Führungselements (28) in Wirkverbindung mit dem Schweißdraht (13) steht, und an zumindest einer weiteren Seite des Führungselements (28) zumindest ein weiteres Transportelement (33) über ein Antriebsmittel (37) verschoben wird, wodurch von dem einen über das Antriebsmittel (37) verschobenen Transportelement (33) die weiteren in der Führungsbahn (32) angeordneten Transportelemente (33) weiter bewegt werden, **dadurch gekennzeichnet, dass** zumindest ein Führungselement (28) zur Anpassung an den Durchmesser des Schweißdrahtes (13) verschoben wird.

22. Förderverfahren nach Anspruch 21, **dadurch gekennzeichnet, dass** das Führungselement (28) in einem Grundkörper (29) bevorzugt in Längsrichtung und/oder in der Höhe verschoben wird.

23. Förderverfahren nach Anspruch 22, **dadurch gekennzeichnet, dass** mehrere Führungselemente (28) im Grundkörper (29) angeordnet werden.

24. Förderverfahren nach Anspruch 22 oder 23, **dadurch gekennzeichnet, dass** bevorzugt drei um 120° versetzte Führungselemente (28) im Grundkörper (29) angeordnet werden.

25. Förderverfahren nach einem der Ansprüche 22 bis 24, **dadurch gekennzeichnet, dass** der Grundkörper (29) mit dem darin angeordneten Führungselement (28) bevorzugt zentrisch in einer Antriebshülse (43) angeordnet wird, welche das Antriebsmittel (37) ausbildet.

26. Förderverfahren nach Anspruch 25, **dadurch gekennzeichnet, dass** zumindest ein Transportelement (33) in ein Gewinde (36) des Antriebsmittels (37) eingreift, wobei die Kontur des Gewindes (36) der Kontur des Transportelementes (33) angepasst wird.

27. Förderverfahren nach Anspruch 26, **dadurch gekennzeichnet, dass** das Gewinde (36) der Antriebshülse (43), der Grundkörper (29) und das Führungselement (28) bevorzugt konisch ausgebildet werden.

28. Förderverfahren nach Anspruch 26 oder 27, **dadurch gekennzeichnet, dass** der Grundkörper (29) einen bevorzugt zylindrischen Fortsatz (42) aufweist, über welchen der Grundkörper (29) bevorzugt über eine Lageranordnung (44) im Inneren der Antriebshülse (43) gelagert wird.

29. Förderverfahren nach Anspruch 28, **dadurch gekennzeichnet, dass** der Grundkörper (29) an der dem Fortsatz (42) gegenüberliegenden Seite einen bevorzugt rechteckig ausgebildeten Positionierflansch (45) aufweist.

30. Förderverfahren nach Anspruch 29, **dadurch gekennzeichnet, dass** der Positionierflansch (45) mit einem Halteelement (46) drehfest verbunden wird.

31. Förderverfahren nach Anspruch 30, **dadurch gekennzeichnet, dass** ein Kupplungselement (47) an der gegenüberliegenden Seite des Halteelementes (46) mit der Antriebshülse (43) verbunden wird.

32. Förderverfahren nach Anspruch 31, **dadurch gekennzeichnet, dass** das Kupplungselement (47) oder die Antriebshülse (43) direkt mit einem Antrieb (57), insbesondere einem Elektromotor verbunden wird.

33. Antriebssystem nach Anspruch 32, **dadurch gekennzeichnet, dass** der Antrieb (57) axial zu der Drahtfördervorrichtung angeordnet wird.

34. Förderverfahren nach Anspruch 33, **dadurch gekennzeichnet, dass** der Antrieb (57) über eine im Antrieb (57) angeordnete Hohlwelle (58) mit dem Kupplungselement (47) verbunden wird, wobei der Schweißdraht (13) durch die Hohlwelle (57) gefördert wird.

35. Förderverfahren nach der Ansprüche 32 bis 34, **dadurch gekennzeichnet, dass** der Antrieb (57), insbesondere ein Gehäuse (59) des Antriebes (57), drehfest mit einem weiteren Halteelement (60) verbunden wird.

36. Förderverfahren nach einem der Ansprüche 22 bis 35, **dadurch gekennzeichnet, dass** über ein im Grundkörper (29) zwischen dem Positionierflansch (45) und dem Führungselement (28) angeordnetes Druckelement (61) eine Druckkraft auf das Führungselement (28) ausgeübt wird.

37. Förderverfahren nach einem der Ansprüche 22 bis 36, **dadurch gekennzeichnet, dass** zumindest ein am Grundkörper (29) angeordneter Führungszapfen (50) in eine Führungsnut (38) des Führungselements (28) eingreift und das Führungselement (28) über diese Anordnung verschoben wird.

38. Förderverfahren nach einem der Ansprüche 21 bis 37, **dadurch gekennzeichnet, dass** das Transportelement (33) in Form einer Kugel gebildet wird.

39. Förderverfahren nach einem der Ansprüche 25 bis 38, **dadurch gekennzeichnet, dass** die Antriebshülse (43) einen Außendurchmesser (67) bevorzugt zwischen 20mm und 30mm aufweisen wird.

40. Förderverfahren nach einem der Ansprüche 21 bis 39, **dadurch gekennzeichnet, dass** die Drahtfördervorrichtung (27) bevorzugt in einem Schweißbrenner (10) und/oder einem Schweißgerät (1) angeordnet wird.

## Claims

1. A wire feed device for transporting a welding wire (13) from a wire storage to a point of consumption, including at least one element (28) for guiding the welding wire (13), wherein at least one guiding element (28) including a guide path (32) is provided, along which several transport elements (33) are displaceably mounted, wherein furthermore at least one transport element (33) is connected with a drive means (37) and at least one further transport element (33) is connected with the welding wire (13) in a force-locking and/or form-locking manner, **characterized in that** at least one guiding element (28) is displaceably arranged for adaptation to the diameter of the welding wire (13).

2. A wire feed device according to claim 1, **characterized in that** at least one guiding element (28) is displaceably arranged in a base body (29).

3. A wire feed device according to claim 1 or 2, **characterized in that** several guiding elements (28) are provided.

4. A wire feed device according to claim 3, **characterized in that** three guiding elements (28), which are preferably offset by an angle of 120°, are arranged about the welding wire (13).

5. A wire feed device according to any one of claims 2 to 4, **characterized in that** the base body (29) together with said at least one guiding element (28) is, preferably centrically, arranged in a drive sleeve (43), with the drive means (37) being formed by this drive sleeve (43).

6. A wire feed device according to claim 5, **characterized in that** the drive sleeve (43) is formed with an internal thread adapted to the contour of the transport element (33) and engaged by at least one transport element (33).

7. A wire feed device according to claim 6, **characterized in that** the internal thread of the drive sleeve (43), the base body (29) and the guiding element (28) are preferably conically designed.

8. A wire feed device according to claim 6 or 7, **characterized in that** the base body (29) comprises a preferably cylindrical projection (42), which is mounted in the interior of the drive sleeve (43), preferably via a bearing assembly (44).

9. A wire feed device according to claim 8, **characterized in that** the base body (29), on its side located opposite the projection (42), comprises a preferably rectangularly designed positioning flange (45).

10. A wire feed device according to claim 9, **characterized in that** the positioning flange (45) is connected with a retention element (46) in a rotationally fast manner.

11. A wire feed device according to claim 10, **characterized in that** the drive sleeve (43) is connected with a coupling element (47), said coupling element (47) being arranged on the opposite side of the retention element (46).

12. A wire feed device according to claim 11, **characterized in that** the coupling element (47) or the drive sleeve (43) is directly connected with a drive (57), in particular an electromotor.

13. A wire feed device according to claim 12, **characterized in that** the drive (57) is arranged axially to the wire feed device (27).

14. A wire feed device according to claim 13, **characterized in that** the drive (57) comprises a hollow shaft (58), which is connected with the coupling element (47) and through which the welding wire (13) is passable to the wire feed device (27).

15. A wire feed device according to any one of claims 12 to 14, **characterized in that** the drive (57), in particular a casing (59) of the drive (57), is connected with a further retention element (60) in a rotationally fast manner.

16. A wire feed device according to any one of claims 2 to 15, **characterized in that** a pressure element (61) is arranged in the base body (29) so as to be positioned between the positioning flange (45) and the guiding element (28) and exert a pressure force onto the guiding element (28).

17. A wire feed device according to any one of claims 2 to 16, **characterized in that** the guiding element (28) comprises a guide groove (38) and at least one guide pin (50) is arranged on the base body (29) to engage said guide groove (38) of the guiding element (28).

18. A wire feed device according to any one of claims 1 to 17, **characterized in that** the transport element (33) is designed in the form of a ball.

19. A wire feed device according to any one of claims 5 to 18, **characterized in that** the drive sleeve (43) has an outer diameter (67) of between 20mm and 30mm.

20. A wire feed device according to any one of claims 1 to 19, **characterized in that** the wire feed device (27) is arranged in a welding torch (10) and/or welding apparatus (1).

21. A method for feeding a welding wire (13) from a wire storage to a point of consumption, wherein the welding wire (13) is guided through at least one element (28), and wherein several transport elements (33) are guided in at least one guiding element (28) to circulate along a guide path (32), with at least one transport element (33) being in operative connection with the welding wire (13) on a side of the guiding element (28) facing the welding wire (13), and on at least one further side of the guiding element (28), at least one further transport element (33) is displaced by a drive means (37), thus causing the further transport elements (33) arranged in the guide path (32) to be moved on by said one transport element (33) displaced by the drive means (37), **characterized in that** at least one guiding element (28) is displaced for adaptation to the diameter of the welding wire (13).

22. A feeding method according to claim 21, **characterized in that** the guiding element (28) is displaced in a base body (29), preferably in the longitudinal and/or vertical direction.

23. A feeding method according to claim 22, **characterized in that** several guiding elements (28) are arranged in the base body (29).

24. A feeding method according to claim 22 or 23, **characterized in that** preferably three guiding elements (28), which are offset by 120°, are arranged in the base body (29).

25. A feeding method according to any one of claims 22 to 24, **characterized in that** the base body (29), together with the guiding element (28) arranged therein, is preferably centrically arranged in a drive sleeve (43) forming the drive means (37).

26. A feeding method according to claim 25, **characterized in that** at least one transport element (33) engages a thread (36) of the drive means (37), with the contour of the thread (36) being adapted to the contour of the transport element (33).

27. A feeding method according to claim 26, **characterized in that** the thread (36) of the drive sleeve (43), the base body (29) and the guiding element (28) are preferably conically designed.

28. A feeding method according to claim 26 or 27, **characterized in that** the base body (29) comprises a preferably cylindrical projection (42), via which the base body (29) is mounted in the interior of the drive sleeve (43), preferably via a bearing assembly (44).

29. A feeding method according to claim 28, **characterized in that** the base body (29), on its side located opposite the projection (42), comprises a preferably rectangularly designed positioning flange (45).

30. A feeding method according to claim 29, **characterized in that** the positioning flange (45) is connected with a retention element (46) in a rotationally fast manner.

31. A feeding method according to claim 30, **characterized in that** a coupling element (47) is connected with the drive sleeve (43) on the opposite side of the retention element (46).

32. A feeding method according to claim 31, **characterized in that** the coupling element (47) or the drive sleeve (43) is directly connected with a drive (57), in particular an electromotor.

33. A feeding method according to claim 32, **characterized in that** the drive (57) is arranged axially to the wire feed device.

34. A feeding method according to claim 33, **characterized in that** the drive (57) is connected with the coupling element (47) via a hollow shaft (58) arranged in the drive (57), said welding wire (13) being fed through said hollow shaft (58).

35. A feeding method according to claims 32 to 34, **characterized in that** the drive (57), in particular a casing (59) of the drive (57), is connected with a further retention element (60) in a rotationally fast manner.

36. A feeding method according to any one of claims 22 to 35, **characterized in that** a pressure force is exerted on the guiding element (28) by a pressure element (61) arranged in the base body (29) between the positioning flange (45) and the guiding element (28).

37. A feeding method according to any one of claims 22 to 36, **characterized in that** at least one guide pin (50) arranged on the base body (29) engages a guide groove (38) of the guiding element (28) and the guiding element (28) is displaced via said assembly.

38. A feeding method to according to any one of claims 21 to 37, **characterized in that** the transport element (33) is designed in the form of a ball.

39. A feeding method according to any one of claims 25 to 38, **characterized in that** the drive sleeve (43) has an outer diameter (67) preferably of between 20mm and 30mm.

40. A feeding method according to any one of claims 21 to 39, **characterized in that** the wire feed device (27) is preferably arranged in a welding torch (10) and/or welding apparatus (1).

## Revendications

1. Dispositif d'acheminement de fil pour le transport d'un fil de soudure (13) depuis une réserve de fil vers un point consommateur, comprenant au moins un élément (28) de guidage du fil de soudure (13), où au moins un élément de guidage (28) est prévu avec un chemin de guidage (32), le long duquel plusieurs éléments de transport (33) sont montés de façon coulissante, et où, par ailleurs, au moins un élément de transport (33) est relié à un moyen d'entraînement (37), et au moins un autre élément de transport (33) est relié avec couplage des forces et/ou avec couplage des formes au fil de soudure (13),
**caractérisé en ce qu'**au moins un élément de guidage (28) est monté de façon coulissante en vue d'une adaptation au diamètre du fil de soudure (13).

2. Dispositif d'acheminement de fil selon la revendication 1,
**caractérisé en ce qu'**au moins un élément de guidage (28) est monté de façon coulissante dans un corps de base (29).

3. Dispositif d'acheminement de fil selon la revendication 1 ou 2,
**caractérisé en ce que** plusieurs éléments de guidage (28) sont prévus.

4. Dispositif d'acheminement de fil selon la revendication 3,
**caractérisé en ce que** trois éléments de guidage (28), de préférence espacés d'un angle de 120° les uns des autres, sont disposés autour du fil de soudure (13).

5. Dispositif d'acheminement de fil selon l'une des revendications 2 à 4,
**caractérisé en ce que** le corps de base (29), avec ledit au moins un élément de guidage (28), est disposé de préférence de façon centrée dans une douille d'entraînement (43), le moyen d'entraînement (37) étant constitué par cette douille d'entraînement (43).

6. Dispositif d'acheminement de fil selon la revendication 5,
**caractérisé en ce que** la douille d'entraînement (43) est conformée avec un filetage intérieur adapté au contour de l'élément de transport (33), dans lequel s'engage au moins un élément de transport (33).

7. Dispositif d'acheminement de fil selon la revendication 6,
**caractérisé en ce que** le filetage intérieur de la douille d'entraînement (43), le corps de base (29) et l'élément de guidage (28) sont de préférence configurés selon une forme conique.

8. Dispositif d'acheminement de fil selon la revendication 6 ou 7, **caractérisé en ce que** le corps de base (29) comporte un prolongement de préférence cylindrique (42), qui est supporté à l'intérieur de la douille d'entraînement (43), de préférence par l'intermédiaire d'un agencement de palier (44).

9. Dispositif d'acheminement de fil selon la revendication 8,
**caractérisé en ce que**, du côté opposé au prolongement (42), le corps de base (29) comporte une bride de positionnement (45) de préférence configurée en une forme rectangulaire.

10. Dispositif d'acheminement de fil selon la revendication 9,
**caractérisé en ce que** la bride de positionnement (45) est reliée à un élément de maintien (46) de façon solidaire en rotation.

11. Dispositif d'acheminement de fil selon la revendication 10,
**caractérisé en ce que** la douille d'entraînement (43) est reliée à un élément d'accouplement (47), l'élément d'accouplement (47) étant disposé du côté opposé à l'élément de maintien (46).

12. Dispositif d'acheminement de fil selon la revendication 11,
**caractérisé en ce que** l'élément d'accouplement (47) ou la douille d'entraînement (43) est relié(e) de façon directe à un entraînement (57), en particulier à un moteur électrique.

13. Dispositif d'acheminement de fil selon la revendication 12,
**caractérisé en ce que** l'entraînement (57) est disposé axialement par rapport au dispositif (27) d'acheminement du fil.

14. Dispositif d'acheminement de fil selon la revendication 13,
**caractérisé en ce que** l'entraînement (57) comporte un arbre creux (58), qui est relié à l'élément d'accouplement (47), et à travers lequel peut être enfilé le fil de soudure (13), pour rejoindre le dispositif (27) d'acheminement du fil.

15. Dispositif d'acheminement de fil selon l'une des revendications 12 à 14,
**caractérisé en ce que** l'entraînement (57), en particulier un boîtier (59) de l'entraînement (57), est relié de façon solidaire en rotation à un autre élément de maintien (60).

16. Dispositif d'acheminement de fil selon l'une des revendications 2 à 15,
**caractérisé en ce qu'**un élément de pression (61) est disposé à l'intérieur du corps de base (29), et est positionné entre la bride de positionnement (45) et l'élément de guidage (28), et exerce une force de pression sur l'élément de guidage (28).

17. Dispositif d'acheminement de fil selon l'une des revendications 2 à 16,
**caractérisé en ce que** l'élément de guidage (28) comporte une rainure de guidage (38), et qu'au moins un axe de guidage (50) est disposé sur le corps de base (29) pour s'engager dans la rainure de guidage (38) de l'élément de guidage (28).

18. Dispositif d'acheminement de fil selon l'une des revendications 1 à 17,
**caractérisé en ce que** l'élément de transport (33) est réalisé sous forme d'une bille.

19. Dispositif d'acheminement de fil selon l'une des revendications 5 à 18,
**caractérisé en ce que** la douille d'entraînement (43) présente un diamètre extérieur (67) compris entre 20 mm et 30 mm.

20. Dispositif d'acheminement de fil selon l'une des revendications 1 à 19,
**caractérisé en ce que** le dispositif d'acheminement (27) du fil est disposé dans une torche à souder (10) et/ou dans un appareil de soudage (1).

21. Procédé d'acheminement d'un fil de soudure (13) depuis une réserve de fil vers un point consommateur, où le fil de soudure (13) est guidé par au moins un élément (28), et où plusieurs éléments de transport (33) sont guidés dans au moins un élément de guidage (28) en circulant le long d'un chemin de guidage (32), où au moins un élément de transport (33) est en prise d'action avec le fil de soudure (13), d'un côté de l'élément de guidage (28) qui est tourné vers le fil de soudure (13), et où au moins un autre élément de transport (33) est déplacé par l'intermédiaire d'un moyen d'entraînement (37) sur au moins un autre côté de l'élément de guidage (28), ce qui fait que les autres éléments de transport (33) placés dans le chemin de guidage (32) se trouvent avancés par ledit un élément de transport (33) mû par le moyen d'entraînement (37),
**caractérisé en ce qu'**au moins un élément de guidage (28) est déplacé en vue d'une adaptation au diamètre du fil de soudure (13).

22. Procédé d'acheminement selon la revendication 21,
**caractérisé en ce que** l'élément de guidage (28) est déplacé à l'intérieur d'un corps de base (29), de préférence dans le sens longitudinal et/ou en hauteur.

23. Procédé d'acheminement selon la revendication 22,
**caractérisé en ce que** plusieurs éléments de guidage (28) sont disposés dans le corps de base (29).

24. Procédé d'acheminement selon la revendication 22 ou 23,
**caractérisé en ce que** de préférence trois éléments de guidage (28) espacés de 120° les uns des autres sont disposés dans le corps de base (29).

25. Procédé d'acheminement selon l'une des revendications 22 à 24,
**caractérisé en ce que** le corps de base (29) avec l'élément de guidage (28) contenu dans celui-ci est disposé de préférence de façon centrée dans une douille d'entraînement (43), qui constitue le moyen d'entraînement (37).

26. Procédé d'acheminement selon la revendication 25,
**caractérisé en ce qu'**au moins un élément de transport (33) s'engage dans un filetage (36) du moyen d'entraînement (37), le contour du filetage (36) étant adapté au contour de l'élément de transport (33).

27. Procédé d'acheminement selon la revendication 26,
**caractérisé en ce que** le filetage (36) de la douille d'entraînement (43), le corps de base (29) et l'élément de guidage (28) sont de préférence configurés selon une forme conique.

28. Procédé d'acheminement selon la revendication 26 ou la revendication 27,
**caractérisé en ce que** le corps de base (29) comporte un prolongement (42) de préférence de forme cylindrique, par l'intermédiaire duquel le corps de base (29) est supporté dans la douille d'entraînement (43) de préférence par l'intermédiaire d'un agencement de palier (44).

29. Procédé d'acheminement selon la revendication 28,
**caractérisé en ce que**, du côté opposé au prolongement (42), le corps de base (29) comporte une bride de positionnement (45) de préférence configurée en une forme rectangulaire.

30. Procédé d'acheminement selon la revendication 29,
**caractérisé en ce que** la bride de positionnement (45) est reliée à un élément de maintien (46) de façon solidaire en rotation.

31. Procédé d'acheminement selon la revendication 30,
**caractérisé en ce qu'**un élément d'accouplement (47) est relié à la douille d'entraînement (43), du côté opposé à l'élément de maintien (46).

32. Procédé d'acheminement selon la revendication 31,
**caractérisé en ce que** l'élément d'accouplement (47) ou la douille d'entraînement (43) est relié(e) de façon directe à un entraînement (57), en particulier à un moteur électrique.

33. Procédé d'acheminement selon la revendication 32,
**caractérisé en ce que** l'entraînement (57) est disposé axialement par rapport au dispositif d'acheminement du fil.

34. Procédé d'acheminement selon la revendication 33,
**caractérisé en ce que** l'entraînement (57) est relié à l'élément d'accouplement (47) par l'intermédiaire d'un arbre creux (58) logé dans l'entraînement (57), le fil de soudure (13) étant acheminé à travers l'arbre creux (57).

35. Procédé d'acheminement selon les revendications 32 à 34,
**caractérisé en ce que** l'entraînement (57), en particulier un boîtier (59) de l'entraînement (57), est relié de façon solidaire en rotation à un autre élément de maintien (60).

36. Procédé d'acheminement selon l'une des revendications 22 à 35,
**caractérisé en ce qu'**une force de pression est exercée sur l'élément de guidage (28) par l'intermédiaire d'un élément de pression (61) disposé dans le corps de base (29), entre la bride de positionnement (45) et l'élément de guidage (28).

37. Procédé d'acheminement selon l'une des revendications 22 à 36,
**caractérisé en ce qu'**au moins un axe de guidage (50) disposé sur le corps de base (29) s'engage dans une rainure de guidage (38) de l'élément de guidage (28), et que l'élément de guidage (28) est déplacé par l'intermédiaire de cet agencement.

38. Procédé d'acheminement selon l'une des revendications 21 à 37,
**caractérisé en ce que** l'élément de transport (33) est réalisé sous forme d'une bille.

39. Procédé d'acheminement selon l'une des revendications 25 à 38,
**caractérisé en ce que** la douille d'entraînement (43) présente un diamètre extérieur (67) de préférence compris entre 20 mm et 30 mm.

40. Procédé d'acheminement selon l'une des revendications 21 à 39,
**caractérisé en ce que** le dispositif d'acheminement de fil (27) est de préférence monté dans une torche à souder (10) et/ou dans un appareil de soudage (1).
